# EUROPEAN PATENT APPLICATION

(11) **EP 4 848 444 A1**
(43) Date of publication of application: **02.12.2026**
(21) Application number: 24938387.8
(22) Date of filing: 01.07.2024
(51) Int. Cl.: H01M 50/342

(54) **BATTERY CELL, BATTERY, AND ELECTRICAL DEVICE**

(30) Priority: 16.05.2024 CN 202421064601 U
(71) Applicant: Contemporary Amperex Technology Co., Limited, Ningde, Fujian 352100 (CN)
(72) Inventor: WU, Kai, Ningde, Fujian 352100 (CN); TIAN, Maoting, Ningde, Fujian 352100 (CN); QUAN, Chao, Ningde, Fujian 352100 (CN); GU, Mingguang, Ningde, Fujian 352100 (CN); LI, Yao, Ningde, Fujian 352100 (CN); LI, Wei, Ningde, Fujian 352100 (CN)
(74) Representative: Ran, Handong
(86) International application number: PCT/CN2024/102977
(87) International publication number: WO 2025/236368

(57) **Abstract**

A battery cell (20), a battery (100), and an electrical device. The battery cell (20) comprises a casing (21) and a pressure relief structure (214), the casing (21) has a wall portion (211), and the pressure relief structure (214) is provided on the wall portion (211). The pressure relief structure (214) is provided with a first recess (2143), and the pressure relief structure (214) is configured to be capable of cracking along at least a part of the first recess (2143) when pressure relief is carried out for the battery cell (20). The first recess (2143) comprises at least one groove section, and the groove section comprises a groove bottom face (21431) and two groove side faces (21432). The two groove side faces (21432) are oppositely arranged in the width direction of the groove section. The groove bottom face (21431) and at least one groove side face (21432) transition by means of a fillet (21433), the radius of the fillet (21433) is r, and the width of the groove opening (21435) of the groove section is a, satisfying 0.08 ≤ r/a ≤ 0.4. By enabling the groove bottom surface (21431) and the at least one groove side surface (21432) to transition by using the fillet (21433), the concentration of stress of the groove section is reduced, and the risk of premature cracking of the first recess (2143) is reduced, thereby facilitating an increase in the service life of the battery cell (20). When 0.08 ≤r/a ≤0.4, the service life of the battery cell (20) and the timeliness of pressure relief of the battery cell (20) can both be considered.

## Description

### CROSS-REFERENCE TO RELATED APPLICATION

The present application claims the priority of Chinese Patent Application No. 202421064601.4 filed on May 16, 2024 and entitled "BATTERY CELL, BATTERY, AND ELECTRICAL DEVICE", the entire contents of which are incorporated herein by reference.

### TECHNICAL FIELD

The present application relates to the field of batteries, and in particular, to a battery cell, a battery, and an electrical device.

### BACKGROUND

Batteries are widely used in the field of new energy, for example, electric vehicles and new energy vehicles, which have become a new development trend in the automobile industry. Development of battery technologies needs to take many design factors into consideration at the same time, for example, performance parameters such as energy density, discharge capacity, and charge-discharge rate. In addition, the service life of the batteries also needs to be taken into consideration. However, current batteries have short service life.

### SUMMARY OF THE INVENTION

Objectives of embodiments of the present application are to provide a battery cell, a battery, and an electrical device, which are intended to alleviate the problem of relatively short service life of batteries in the related art.

In a first aspect, an embodiment of the present application provides a battery cell, the battery cell including a shell and a pressure relief structure, the shell having a wall portion; where the pressure relief structure is disposed on the wall portion, the pressure relief structure is provided with a first groove, and the pressure relief structure is configured to be capable of rupturing along at least a portion of the first groove during pressure relief of the battery cell; where the first groove includes at least one groove segment, the groove segment including a groove bottom surface and two groove side surfaces, the two groove side surfaces being disposed opposite to each other along a width direction of the groove segment, and a transition between the groove bottom surface and at least one groove side surface being implemented by a rounded corner.

In the aforementioned technical solution, the battery cell is provided with a pressure relief structure, and the pressure relief structure is provided with a first groove; the pressure relief structure is capable of rupturing along at least a portion of the first groove during pressure relief of the battery cell, thereby facilitating the release of pressure inside the battery cell. The first groove includes at least one groove segment, which includes a groove bottom surface and two groove side surfaces arranged opposite to each other along the width direction of the groove segment. By implementing the transition between the groove bottom surface and at least one groove side surface using the rounded corner, it is beneficial to alleviating stress concentration at the groove segment, reduce strain at the groove segment, and reducing the risk of premature rupturing of the first groove, thereby helping to improve the service life of the battery cell.

As an optional technical solution of the embodiment of the present application, the radius of the rounded corner is r, and the width of the groove opening of the groove segment is a, satisfying: 0.08≤r/a≤0.4, optionally, 0.12≤r/a≤0.3.

In the above technical solution, when r/a≥0.08, the radius of the rounded corner is relatively large, which has a good effect on alleviating stress concentration at the groove segment, effectively reducing the strain at the groove segment, reducing the risk of premature rupturing of the first groove, and thus helping to improve the service life of the battery cell. When r/a≤0.4, the radius of the rounded corner is not excessively large, and the degree of stress concentration at the groove segment is not excessively low; this facilitates the timely rupturing of the groove segment during pressure relief of the battery cell, thereby helping to improve the timeliness of pressure relief of the battery cell. Therefore, when 0.08≤r/a≤0.4, both the service life of the battery cell and the timeliness of pressure relief of the battery cell can be taken into account.

In the above technical solution, when r/a≥0.12, the radius of the rounded corner is larger, which has a better effect on alleviating stress concentration at the groove segment, effectively reducing the strain at the groove segment, reducing the risk of premature rupturing of the first groove, and thus helping to improve the service life of the battery cell. When r/a≤0.3, the radius of the rounded corner is not excessively large, and the degree of stress concentration at the groove segment is not excessively low; this facilitates the timely rupturing of the groove segment during pressure relief of the battery cell, thereby helping to improve the timeliness of pressure relief of the battery cell. Therefore, when 0.12≤r/a≤0.3, both the service life of the battery cell and the timeliness of pressure relief of the battery cell can be taken into account.

As an optional technical solution of the embodiment of the present application, 0.03 mm≤r≤0.15 mm, and optionally, 0.06 mm≤r≤0.1 mm.

In the above technical solution, when r≥0.03 mm, the radius of the rounded corner is relatively large, which has a good effect on alleviating stress concentration at the groove segment, effectively reducing the strain at the groove segment, reducing the risk of premature rupturing of the first groove, and thus helping to improve the service life of the battery cell. When r≤0.15 mm, the radius of the rounded corner is not excessively large, and the degree of stress concentration at the groove segment is not excessively low; this facilitates the timely rupturing of the groove segment during pressure relief of the battery cell, thereby helping to improve the timeliness of pressure relief of the battery cell. Therefore, when 0.03 mm≤r≤0.15 mm, both the service life of the battery cell and the timeliness of pressure relief of the battery cell can be taken into account.

When r≥0.06 mm, the radius of the rounded corner is larger, which has a better effect on alleviating stress concentration at the groove segment, effectively reducing the strain at the groove segment, reducing the risk of premature rupturing of the first groove, and thus helping to improve the service life of the battery cell. When r≤0.1, the radius of the rounded corner is not excessively large, and the degree of stress concentration at the groove segment is not excessively low; this facilitates the timely rupturing of the groove segment during pressure relief of the battery cell, thereby helping to improve the timeliness of pressure relief of the battery cell. Therefore, when 0.06 mm≤r≤0.1 mm, both the service life of the battery cell and the timeliness of pressure relief of the battery cell can be taken into account.

As an optional technical solution of the embodiment of the present application, 0.08 mm≤a≤0.4 mm, and optionally, 0.26 mm≤a≤0.34 mm.

In the above technical solution, when a≥0.08 mm, the width of the groove opening of the groove segment is relatively large, which is conducive to timely rupturing of the groove segment during pressure relief of the battery cell, and is conducive to improving the timeliness of pressure relief of the battery cell. When a≤0.4 mm, the width of the groove opening of the groove segment is not excessively large, then the risk of rupturing of the groove segment due to the change in the air pressure inside the battery cell can be reduced, which is conducive to improving the reliability of the battery cell. Therefore, when 0.08 mm≤a≤0.4 mm, the width of the groove opening of the groove segment is moderate in dimension, the groove segment does not easily rupture due to the change in the air pressure inside the battery cell, and is capable of rupturing in time during the pressure relief of the battery cell, which is conducive to improving the timeliness of pressure relief of the battery cell.

When a≥0.26 mm, the width of the groove opening of the groove segment is larger, which is conducive to timely rupturing of the groove segment during pressure relief of the battery cell, and is conducive to improving the timeliness of pressure relief of the battery cell. When a≤0.34 mm, the width of the groove opening of the groove segment is not excessively large, then the risk of rupturing of the groove segment due to the change in the air pressure inside the battery cell can be reduced, which is conducive to improving the reliability of the battery cell. Therefore, when 0.26 mm≤a≤0.34 mm, the reliability and the timeliness of pressure relief of the battery cell are better taken into account.

As an optional technical solution of the embodiment of the present application, the pressure relief structure has a first surface and a second surface arranged opposite to each other in the thickness direction of the wall portion, the pressure relief structure is provided with a plurality of steps of grooves arranged in sequence in a direction from the first surface to the second surface, and in two adjacent steps of grooves, the step of groove far from the first surface is arranged on a groove bottom surface of the step of groove close to the first surface; where the step of groove farthest from the first surface among the plurality of steps of grooves is the first groove.

In the above technical solution, the plurality of steps of grooves are sequentially arranged on the pressure relief structure in the direction from the first surface to the second surface. During forming, the plurality of steps of grooves can be formed step by step, thereby reducing a forming force on the pressure relief structure and reducing a risk of cracks in the pressure relief structure. The pressure relief structure is not prone to failure due to cracks at the positions where the grooves are set, thereby improving the reliability of the battery cell. The plurality of steps of grooves may be formed by stamping, cold heading, or the like, so that the groove wall of the groove will undergo work hardening (the grain arrangement changes, thus resulting in lattice distortion, reducing the metal plasticity, and increasing the material hardness), so that the groove has an enhanced ability to resist an external impact, and is less likely to be damaged by the external impact. This helps reduce the risk of leakage from the pressure relief structure.

As an optional technical solution of the embodiment of the present application, the first surface is the surface of the pressure relief structure facing away from the interior of the shell.

In the above technical solution, by arranging the first groove on the surface of the pressure relief structure facing away from the interior of the shell, the tension that the first weak portion needs to overcome when rupturing is small, and it is easy to rupture.

As an optional technical solution of the embodiment of the present application, the first groove includes a plurality of groove segments connected to one another, and the plurality of groove segments jointly define at least one predetermined pressure relief region; the predetermined pressure relief region is configured to be openable when the pressure relief structure ruptures along at least a portion of the first groove, so as to release the internal pressure of the battery cell.

In the above technical solution, the plurality of groove segments define a predetermined pressure relief region; the pressure relief structure is capable of rupturing along the plurality of groove segments during pressure relief of the battery cell, so as to open the predetermined pressure relief region to release the pressure inside the battery cell. Furthermore, the connection position between the two groove segments is weaker, making it easy to rupture to open the predetermined pressure relief region for pressure relief, which can further increase the pressure relief area and pressure relief rate of the battery cell.

As an optional technical solution of the embodiment of the present application, the plurality of groove segments include a first groove segment and a second groove segment which are connected with each other and jointly define at least one predetermined pressure relief region.

In the above technical solution, the first groove segment and the second groove segment are interconnected structures, so that the first groove segment and the second groove segment jointly define at least one predetermined pressure relief region. On one hand, it can increase the pressure relief area of the battery cell, thereby enhancing the pressure relief rate of the battery cell. On the other hand, the connection position between the first groove segment and the second groove segment is weaker, making it easy to rupture to open the predetermined pressure relief region to relieve the internal pressure of the battery cell.

As an optional technical solution of the embodiment of the present application, the plurality of groove segments include a first groove segment, a second groove segment, and a third groove segment; the first groove segment and the third groove segment are arranged opposite to each other; the second groove segment is connected to the first groove segment and the third groove segment; and the first groove segment, the second groove segment, and the third groove segment jointly define at least one predetermined pressure relief region.

In the above technical solution, the plurality of groove segments include the first groove segment, the second groove segment, and the third groove segment, and the second groove segment connects the first groove segment and the third groove segment, so that the pressure relief structure is capable of rupturing along the first groove segment, the second groove segment, and the third groove segment during the pressure relief of the battery cell, so as to open the predetermined pressure relief region to relieve an internal pressure of the battery cell. The connection position between the first groove segment and the second groove segment and the connection position between the first groove segment and the third groove segment are weaker, making it easier to rupture and open the predetermined pressure relief region for pressure relief, and further improving the pressure relief area and pressure relief rate of the battery cell.

As an optional technical solution of the embodiment of the present application, the connection position between the second groove segment and the first groove segment deviates from the two ends of the first groove segment, and the connection position between the second groove segment and the third groove segment deviates from the two ends of the third groove segment, so that the predetermined pressure relief region is formed on both sides of the second groove segment.

In the above technical solution, by setting the connection position between the first groove segment and the second groove segment to be located between the two ends of the first groove segment, and setting the connection position between the third groove segment and the second groove segment to be located between the two ends of the third groove segment, so that the first groove segment, the second groove segment, and the third groove segment form a structure similar to an "H" shape, and the predetermined pressure relief region can be formed on both sides of the second groove segment of the first groove. Moreover, the two predetermined pressure relief regions are capable of being opened in a split manner for pressure relief during the pressure relief of the battery cell, which is conducive to further increasing the pressure relief effect of the battery cell and can effectively improve the pressure relief rate of the battery cell.

As an optional technical solution of the embodiment of the present application, the first groove extends along an arc-shaped trajectory.

In the above technical solution, by extending the first groove along an arc-shaped trajectory, the first groove can define a relatively large predetermined pressure relief region. During the pressure relief of the battery cell, the predetermined pressure relief region opens a relatively large opening, thereby facilitating the rapid pressure relief of the battery cell.

As an optional technical solution of the embodiment of the present application, the pressure relief structure is integrally formed with the wall portion.

In the above technical solution, the pressure relief structure is integrally formed with the wall portion without an additional welding or bonding step, which helps reduce the risk of leakage from the pressure relief structure. Moreover, during production, it is easy to keep fracture initiation pressures of a plurality of battery cells processed relatively consistent.

As an optional technical solution of the embodiment of the present application, the pressure relief structure and the wall portion are arranged separately, the wall portion is provided with a pressure relief hole, and the pressure relief structure is mounted on the wall portion and covers the pressure relief hole.

In the above technical solution, the pressure relief structure is arranged separately from the wall portion and is mounted on the wall portion, so as to facilitate processing and manufacturing.

As an optional technical solution of the embodiment of the present application, the shell includes a case and an end cover. The case has an opening; and the end cover is connected to the case and closes the opening; where the end cover is the wall portion, or the case includes the wall portion.

In the above technical solution, when the end cover is the wall portion, the pressure relief structure is arranged on the end cover, which is simple and convenient to manufacture. When the case includes the wall portion, the pressure relief structure is arranged on a wall of the case, and the fluid medium sprayed from the pressure relief structure is not easy to act on another electrical connection structure on the end cover, which is conducive to reducing the risk of short circuit of the battery cell.

In a second aspect, an embodiment of the present application further provides a battery. The battery includes the above battery cell.

In a third aspect, an embodiment of the present application further provides an electrical device, the electrical device including the above battery cell.

### BRIEF DESCRIPTION OF DRAWINGS

To more clearly describe the technical solutions of the embodiments of the present application, the drawings to be used in the embodiments will be briefly introduced below, and it should be understood that the following drawings only show some embodiments of the present application, and therefore should not be considered as limiting the scope of the present application. For those of ordinary skills in the art, other relevant drawings may also be obtained based on these drawings without creative efforts.
Fig. 1 is a schematic structural diagram of a vehicle according to some embodiments of the present application;
FIG. 2 is an exploded structural diagram of a battery according to some embodiments of the present application;
FIG. 3 is a schematic structural diagram of a battery cell according to some embodiments of the present application;
FIG. 4 is an exploded structural view of a battery cell according to some embodiments of the present application;
FIG. 5 is a bottom view of a shell of a battery cell according to some embodiments of the present application;
FIG. 6 is a partial sectional view of a shell of a battery cell according to some embodiments of the present application;
FIG. 7 is a partial enlarged view of a part A in the shell shown in FIG. 6;
FIG. 8 is a partial enlarged view of a part B in FIG. 7;
FIG. 9 is a bottom view of a shell of a battery cell according to further embodiments of the present application;
FIG. 10 is a bottom view of a shell of a battery cell provided by still further embodiments of the present application.

Reference numerals: 1000-Vehicle; 100-Battery; 10-Box; 11-First box body; 12-Second box body; 20-Battery cell; 21-Shell; 211-Wall portion; 2111-First surface; 2112-Second surface; 212-Side wall; 214-Pressure relief structure; 2141-First step of groove; 2142-Second step of groove; 2143-First groove; 2143a-First groove segment; 2143b-Second groove segment; 2143c-Third groove segment; 21431-Groove bottom surface; 21432-Groove side surface; 21433-Rounded corner; 21434-Predetermined pressure relief region; 21435-Groove opening; 215-Case; 2151-Opening; 216-End cover; 22-Electrode assembly; 221-Tab; 23-Electrode terminal; 24-Current collecting member; 200-Controller; 300-Motor.

### DETAILED DESCRIPTION

In order to make the objects, technical solutions and advantages of embodiments of the present application clearer, the technical solutions in the embodiments of the present application will be clearly described below with reference to the drawings for the embodiments of the present application. Apparently, the described embodiments are some of, rather than all of, the embodiments of the present application. All other embodiments obtained by those of ordinary skill in the art based on the embodiments in the present application without any creative effort shall fall within the scope of protection of the present application.

Unless otherwise defined, all technical and scientific terms used in the present application have the same meanings as those commonly understood by those skilled in the art to which the present application belongs. The terms used in the specification of the present application are merely for the purpose of describing specific embodiments, but are not intended to limit the present application. The terms "include" and "have" and any variations thereof in the specification and the claims of the present application as well as the above description of the drawings are intended to cover non-exclusive inclusions. The terms "first," "second," and the like in the specification and the claims of the present application as well as the above drawings are used to distinguish different objects, rather than to describe a specific order or primary-secondary relationship.

Reference in the present application to an "embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments.

In the description of the present application, it should be noted that the terms "mounting," "connecting," "connection" and "attachment" should be understood in a broad sense, unless otherwise explicitly specified or defined, for example, it may be a fixed connection, a detachable connection or an integrated connection; and may be a direct connection or an indirect connection through an intermediate medium, or may be a communication between the interior of two elements. For those of ordinary skill in the art, the specific meanings of the above terms in the present application can be understood according to specific situations.

In the present application, the term "and/or" is merely an association that describes the associated object, indicating that there can be three kinds of relationships, for example, A and/or B may denote the following three situations: A exists alone, A and B exist at the same time, and B exists alone. In addition, the character "/" in the present application generally means that the associated objects before and after it are in an "or" relationship.

In the embodiments of the present application, the same reference numerals denote the same components, and for the sake of brevity, detailed descriptions of the same components are omitted in different embodiments. It should be understood that the thickness, length, width and other dimensions of the various components in the embodiments of the present application shown in the drawings, as well as the overall thickness, length, width and other dimensions of an integrated apparatus, are for illustrative purposes only, and should not constitute any limitation to the present application.

In the present application, the "plurality of" refers to more than two (including two).

In the embodiments of the present application, a battery cell may be a secondary battery. The secondary battery refers to a battery cell that, after being discharged, can activate an active material by charging for continued use.

The battery cell may be a lithium-ion battery, a sodium-ion battery, a sodium/lithium-ion battery, a lithium metal battery, a sodium metal battery, a lithium-sulfur battery, a magnesium-ion battery, a nickel-hydrogen battery, a nickel-cadmium battery, a lead storage battery, or the like, which is not limited in the embodiments of the present application.

The battery cell generally includes an electrode assembly. The electrode assembly includes a positive electrode, a negative electrode, and a spacer. In the charging and discharging process of the battery cell, active ions (such as lithium ions) are intercalated and de-intercalated between the positive electrode and the negative electrode in a reciprocating manner. The spacer is arranged between the positive electrode and the negative electrode, and can function to prevent short circuit between the positive electrode and the negative electrode and allow the active ions to pass through.

In some embodiments, the positive electrode may be a positive electrode plate, and the positive electrode plate may include a positive electrode current collector and a positive electrode active material disposed on at least one surface of the positive electrode current collector.

As an example, the positive electrode current collector has two surfaces opposite in its own thickness direction, and the positive electrode active material is arranged on either one or both of the two opposite surfaces of the positive electrode current collector.

As an example, the positive electrode current collector may be a metal foil or composite current collector. For example, if it is the metal foil, silver-plated aluminum, silver-plated stainless steel, stainless steel, copper, aluminum, nickel, baked carbon, carbon, nickel or titanium and the like can be adopted. The composite current collector may include a high molecular material substrate and a metal layer. The composite current collector may be formed by forming a metal material (such as aluminum, aluminum alloy, nickel, nickel alloy, titanium, titanium alloy, silver, and silver alloy) on a polymer material substrate (such as a substrate of polypropylene, polyethylene terephthalate, polybutylene terephthalate, polystyrene, or polyethylene).

As an example, the positive electrode active material may include at least one of a group consisting of following materials: lithium-containing phosphate, lithium transition metal oxide and modified compounds thereof. However, the present application is not limited to these materials, and other conventional materials that can be used as positive electrode active materials for batteries can also be used. These positive electrode active materials may be used alone or in combination of two or more thereof. Examples of lithium-containing phosphates may include, but are not limited to, at least one of lithium iron phosphate (e.g., LiFePO₄ (also abbreviated as LFP)), lithium iron phosphate-carbon composite, lithium manganese phosphate (e.g., LiMnPO₄), lithium manganese phosphate-carbon composite, lithium iron manganese phosphate, and lithium iron manganese phosphate-carbon composite. Examples of the lithium transition metal oxide may include, but are not limited to, at least one of a lithium-cobalt oxide (such as LiCoO₂), lithium-nickel oxide (such as LiNiO₂), lithium-manganese oxide (such as LiMnO₂ and LiMn₂O₄), lithium-nickel-cobalt oxide, lithium-manganese-cobalt oxide, lithium-nickel-manganese oxide, lithium-nickel-cobalt-manganese oxide (such as LiNi_{1/3}Co_{1/3}Mn_{1/3}O₂ (also abbreviated as NCM₃₃₃), LiNi_{0.5}Co_{0.2}Mn_{0.3}O₂ (also abbreviated as NCM₅₂₃), LiNi_{0.5}Co_{0.25}Mn_{0.25}O₂ (also abbreviated as NCM₂₁₁), LiNi_{0.6}Co_{0.2}Mn_{0.2}O₂ (also abbreviated as NCM₆₂₂), LiNi_{0.8}Co_{0.1}Mn_{0.1}O₂ (also abbreviated as NCM₈₁₁), lithium-nickel-cobalt-aluminum oxide (such as LiNi_{0.85}Co_{0.15}Al_{0.05}O₂) and their respective modified compounds.

In some embodiments, the positive electrode may adopt metal foam. The metal foam can be nickel foam, copper foam, aluminum foam, alloy foam, etc. When the metal foam is treated as the positive electrode, the positive electrode active material may be not arranged on a surface of the metal foam, and the positive electrode active material may also be arranged. For example, a lithium source material, a potassium metal, or a sodium metal may also fill or/and be deposited in the foam metal, and the lithium source material is a lithium metal and/or a lithium-rich material.

In some embodiments, the negative electrode may be a negative electrode plate, and the negative electrode plate may include a negative electrode current collector.

As an example, the negative electrode current collector may adopt a metal foil, metal foam or a composite current collector. For example, it is the metal foil, and aluminum or stainless steel subjected to silver surface treatment, stainless steel, copper, aluminum, nickel, carbon electrode, nickel or titanium and the like may be adopted. The metal foam can be nickel foam, copper foam, aluminum foam, alloy foam, etc. The composite current collector may include a high molecular material substrate and a metal layer. The composite current collector may be formed by forming a metal material (such as copper, copper alloy, nickel, nickel alloy, titanium, titanium alloy, silver, and silver alloy) on a polymer material substrate (such as a substrate of polypropylene, polyethylene terephthalate, polybutylene terephthalate, polystyrene, or polyethylene).

For example, the negative electrode plate may include a negative electrode current collector and a negative electrode active material arranged on at least one surface of the negative electrode current collector.

For example, the negative electrode current collector has two surfaces opposite to each other in its own thickness direction, and the negative electrode active material is arranged on either one or both of the two opposite surfaces of the negative electrode current collector.

As an example, the negative electrode active material may be a negative electrode active material which is known in the field and used for the battery cell. As an example, the negative electrode active material may include at least one of the following materials: artificial graphite, natural graphite, soft carbon, hard carbon, a silicon-based material, a tin-based material, lithium titanate, and the like. The silicon-based material may be selected from at least one of elemental silicon, a silicon-oxygen compound, a silicon-carbon composite, a silicon-nitrogen composite, and a silicon alloy. The tin-based material may be selected from at least one of elemental tin, tin-oxygen compound, and tin alloy. However, the present application is not limited to these materials, and other conventional materials useful as negative electrode active materials for batteries can also be used. One of these negative active materials may be used alone, or two or more of these positive active materials may be used in combination.

In some embodiments, the material of the positive electrode current collector may be aluminum, and the material of the negative electrode current collector may be copper.

In some implementations, the electrode assembly further includes a separator, the separator being disposed between the positive electrode and the negative electrode.

In some embodiments, the spacer is a separator. There may be various types of separators, and any well-known separator with a porous structure having good chemical stability and mechanical stability may be selected.

For example, the material of the separator may include at least one of glass fiber, nonwoven fabric, polyethylene, polypropylene, and polyvinylidene fluoride. The separator may be a single-layer film or a multi-layer composite film. When the separator is the multi-layer composite film, the materials of all layers may be the same or different. The spacer can be an independent component positioned between the positive electrode and the negative electrode, and can also be attached to the surfaces of the positive electrode and the negative electrode.

In some embodiments, the separator is a solid electrolyte. The solid electrolyte is arranged between the positive electrode and the negative electrode, and functions to transport ions and isolate the positive electrode from the negative electrode.

In some embodiments, the battery cell further includes an electrolyte, and the electrolyte plays a role in conducting ions between the positive electrode and the negative electrode. The electrolyte may be liquid, gel or solid. The liquid electrolyte includes electrolyte salt and a solvent.

In some embodiments, the electrolyte salt may include at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoroborate, lithium bis(oxalate)borate, lithium difluorooxalate phosphate and lithium tetrafluoroborate.

In some embodiments, the solvent may include at least one of ethylene carbonate, propylene carbonate, methyl ethyl carbonate, diethyl carbonate, dimethyl carbonate, dipropyl carbonate, methyl propyl carbonate, ethyl propyl carbonate, butyl carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, tetramethylene sulfone, dimethyl sulfolane, methyl ethyl sulfone and ethyl sulfone. The solvent may be selected from ether solvents. The ether solvent may include one or more selected from the group consisting of ethylene glycol dimethyl ether, ethylene glycol diethyl ether, diethylene glycol dimethyl ether, tridiethylene glycol dimethyl ether, tetraethylene glycol dimethyl ether, 1,3-dioxolane, tetrahydrofuran, methyltetrahydrofuran, diphenyl ether, or crown ether.

The gel electrolyte includes a skeleton network with a polymer as the electrolyte, paired with an ionic liquid-lithium salt.

The solid electrolyte includes a polymer solid electrolyte, an inorganic solid electrolyte, and a composite solid electrolyte.

For example, the polymer solid electrolyte may be polyether (polyoxyethylene), polysiloxane, polycarbonate, polyacrylonitrile, polyvinylidene fluoride, polymethyl methacrylate, a single-ion polymer, a polyionic liquid-lithium salt, cellulose and the like.

For example, the inorganic solid electrolyte may include one or more of an oxide solid electrolyte (crystalline perovskite, a sodium superconducting ion conductor, garnet and an amorphous LiPON film), a sulfide solid electrolyte (a crystalline lithium superconducting ion conductor (lithium germanium phosphorus sulfur and sulfur silver germanium ore), and amorphous sulfide), a halide solid electrolyte, a nitride solid electrolyte, and a hydride solid electrolyte.

For example, the composite solid electrolyte is formed by adding an inorganic solid electrolyte filler into the polymer solid electrolyte.

In some embodiments, the electrode assembly is of a wound structure. The positive electrode plate and the negative electrode plate are wound into a wound structure.

In some implementations, the electrode assembly is a stacked structure.

As an example, a plurality of positive electrode plates and a plurality of negative electrode plates may be respectively provided, and the plurality of positive electrode plates and the plurality of negative electrode plates are alternately stacked.

As an example, a plurality of positive electrode plates may be provided, the negative electrode plate is folded to form a plurality of folded sections arranged in a stacked manner, and one positive electrode plate is clamped between adjacent folded sections.

As an example, both the positive electrode plate and the negative electrode plate are folded to form a plurality of folded sections arranged in a stacked manner.

As an example, a plurality of separators may be provided, and each of the separators is disposed between any adjacent positive electrode plate and negative electrode plate.

As an example, the separator may be continuously provided, and disposed between any adjacent positive electrode plate and negative electrode plate by means of folding or winding.

In some implementations, the shape of the electrode assembly may be cylindrical, flat, or poly-prismatic, and the like.

In some implementations, the electrode assembly is provided with tabs, where the tabs may conduct a current out from the electrode assembly. The tabs include a positive tab and a negative tab.

In some embodiments, the battery cell may include a shell. The shell is used to encapsulate components such as the electrode assembly and the electrolyte. The shell may be a steel shell, an aluminum shell, a plastic shell (such as polypropylene), a composite metal shell (such as a copper-aluminum composite shell), an aluminum-plastic film, or the like.

As an example, the battery cell may be a cylindrical battery cell, a prismatic battery cell, a pouch battery cell, or a battery cell in another shape. The prismatic battery cell includes, but is not limited to, a square-shell battery cell, a blade-shaped battery cell, and a polygon prism battery. For example, the polygon prism battery may be a hexagonal prism battery.

A battery mentioned in the embodiments of the present application refers a single physical module including one or more battery cells to provide a higher voltage and capacity.

In some embodiments, the battery may be a battery module. When there are a plurality of battery cells, the plurality of battery cells are arranged and fixed to form a battery module.

In some embodiments, the battery may be a battery pack. The battery pack includes a box body and a battery cell. The battery cell or the battery module is accommodated in the box body.

In some embodiments, the box body may serve as a part of a chassis structure of the vehicle. For example, a part of the box body may become at least a part of a vehicle floor, or a part of the box body may become at least a part of a cross beam and a longitudinal beam of a vehicle.

In some embodiments, the battery may be an energy storage apparatus. The energy storage apparatus includes an energy storage container, an energy storage cabinet, and the like.

Development of battery technologies needs to take many design factors into consideration at the same time, for example, performance parameters such as energy density, discharge capacity, and charge-discharge rate. In addition, the service life of the batteries also needs to be taken into consideration. However, current batteries have short service life.

For a battery cell, in order to improve the reliability of the battery cell, a pressure relief mechanism is arranged on the battery cell in the related art. The pressure relief mechanism is provided with a score groove, and when an internal pressure of the battery cell reaches a fracture initiation pressure, the score groove ruptures, so as to relieve the internal pressure of the battery cell to reduce the risk of explosion or fire of the battery cell.

However, during the charge-discharge cycle of the battery cell, the electrode assembly expands. This expansion of the electrode assembly exerts pressure on the shell of the battery cell, causing deformation of the shell. This deformation, in turn, pulls on the score groove of the pressure relief mechanism, resulting in significant strain in the score groove. A battery cell has a large expansion force when fully charged and a small expansion force when discharged. During the charge-discharge process, there is a large expansion force amplitude. Coupled with gas generation inside the battery cell and different external constraints, this can cause significant strain, strain amplitude and strain accumulation in the score groove. This can lead to premature rupturing of the score groove, leakage and other problems, resulting in a short life of the battery cell.

In view of the above, the embodiments of the present application provide a battery cell. The battery cell includes a shell and a pressure relief structure. The shell has a wall portion, and the pressure relief structure is arranged on the wall portion. The pressure relief structure is provided with a first groove, and the pressure relief structure is configured to be capable of rupturing along at least a portion of the first groove during the pressure relief of the battery cell. The first groove includes at least one groove segment, which includes a groove bottom surface and two groove side surfaces. The two groove side surfaces are arranged opposite to each other along the width direction of the groove segment, and a transition between the groove bottom surface and at least one groove side surface is implemented by a rounded corner.

The battery cell is provided with a pressure relief structure, and the pressure relief structure is provided with a first groove; the pressure relief structure is capable of rupturing along at least a portion of the first groove during pressure relief of the battery cell, thereby facilitating the release of pressure inside the battery cell. The first groove includes at least one groove segment, which includes a groove bottom surface and two groove side surfaces arranged opposite to each other along the width direction of the groove segment. By implementing the transition between the groove bottom surface and at least one groove side surface using the rounded corner, it is beneficial to alleviating stress concentration at the groove segment, reduce strain at the groove segment, and reducing the risk of premature rupturing of the first groove, thereby helping to improve the service life of the battery cell.

The battery cell disclosed in the embodiments of the present application may be used in, but is not limited to, electrical apparatuses such as vehicles, ships, or aircrafts. A power supply system of the electrical apparatus can be composed of battery cells, batteries, and other components disclosed in the present application, which is conducive to improving the reliability of the battery cells.

An embodiment of the present application provides an electrical apparatus with a battery used as a power source. The electrical apparatus may be, but is not limited to, a mobile phone, a tablet, a laptop, an electric toy, an electric tool, a storage battery car, an electric vehicle, a ship, a spacecraft, or the like. The electric toy may include a fixed or mobile electric toy, such as a game console, an electric car toy, an electric ship toy, an electric airplane toy, and the like. The spacecraft may include an airplane, a rocket, a space shuttle, a spaceship, and the like.

For convenience of description, the following embodiments are illustrated by taking an example in which an electrical apparatus according to an embodiment of the present application is a vehicle.

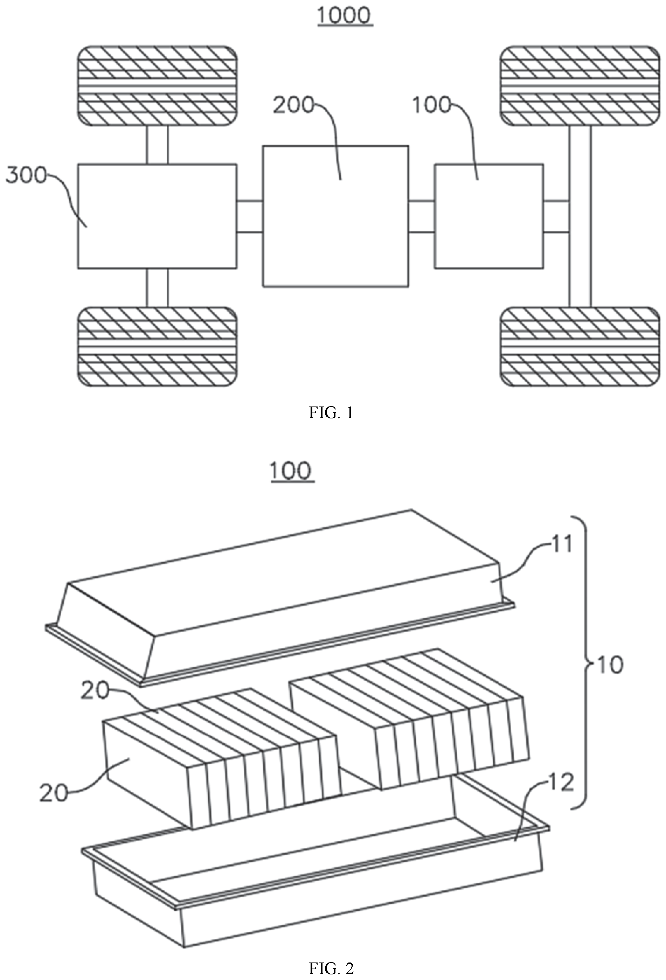

Referring to FIG. 1, FIG. 1 is a schematic structural view of a vehicle 1000 according to some embodiments of the present application. The vehicle 1000 may be a fuel vehicle, a gas vehicle, or a new energy vehicle. The new energy vehicle may be an all-electric vehicle, a hybrid vehicle, an extended-range vehicle, or the like. A battery 100 is provided in the vehicle 1000. The battery 100 may be arranged at the bottom of the vehicle 1000, or the head of the vehicle 1000, or the tail of the vehicle 1000. The battery 100 may be configured to supply power to the vehicle 1000. For example, the battery 100 may be used as an operating power source or usage power source for the vehicle 1000. The vehicle 1000 may further include a controller 200 and a motor 300. The controller 200 is used for controlling the battery 100 to supply power to the motor 300, for example, to satisfy the operating power demand when the vehicle 1000 is starting, navigating, and traveling.

In some embodiments of the present application, the battery 100 can not only be used as the operating power source or usage power source for the vehicle 1000, but also as the driving power source for the vehicle 1000 to replace or partially replace fuel or natural gas to provide driving power for the vehicle 1000.

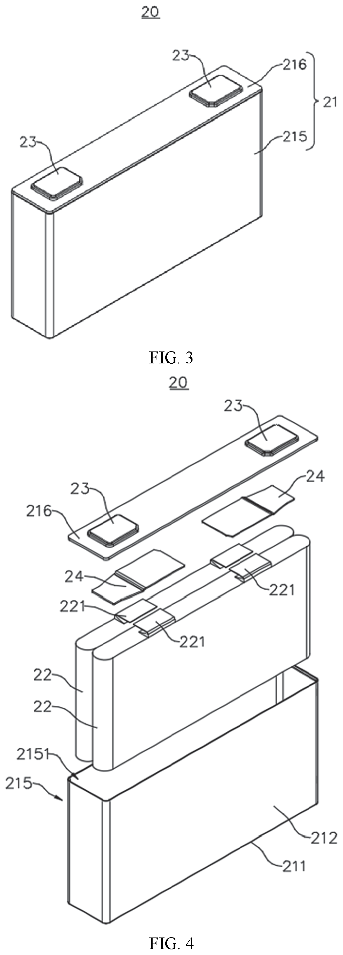

Referring to FIG. 2 and FIG. 3, FIG. 2 is an exploded structural view of a battery 100 according to some embodiments of the present application, and FIG. 3 is a schematic structural view of a battery cell 20 according to some embodiments of the present application. The battery 100 includes a box body 10 and a battery cell 20, and the battery cell 20 is accommodated in the box body 10.

The box body 10 is configured to provide an assembling space for the battery cells 20, and the box body 10 may be of various structures. In some embodiments, the box body 10 may include a first box body 11 and a second box body 12. The first box body 11 and the second box body 12 cover each other, and the first box body 11 and the second box body 12 jointly define an assembling space for accommodating the battery cell 20. The second box body 12 may be of a hollow structure with an open end, the first box body 11 may be of a plate-like structure, and the first box body 11 covers the open side of the second box body 12, so that the first box body 11 and the second box body 12 jointly define the assembling space. Both the first box body 11 and the second box body 12 may also be of a hollow structure with an open side, and the open side of the first box body 11 covers the open side of the second box body 12.

Of course, the box body 10 formed by the first box body 11 and the second box body 12 may be in various shapes, such as a cylinder, a cuboid, or a cube. Exemplarily, in FIG. 2, the box body 10 is in a cuboid shape.

In the battery 100, one battery cell 20 or a plurality of battery cells 20 may be arranged in the box body 10. If a plurality of battery cells 20 are arranged in the box body 10, the plurality of battery cells 20 may be connected in series, parallel or series and parallel, where the series-parallel connection means that some of the plurality of battery cells 20 are connected in series and some are connected in parallel. The plurality of battery cells 20 may be directly connected in series, parallel or series and parallel together, and then, the whole formed by the plurality of battery cells 20 is accommodated within the box 10. Of course, the battery 100 may also be in the form of a battery module composed of a plurality of battery cells 20 in series, parallel or series and parallel first, and then, a plurality of battery modules are connected in series, parallel or series and parallel to form a whole which is accommodated within the box 10.

In some embodiments, the battery 100 may further include other structures. For example, the battery 100 may further include a busbar component, and the plurality of battery cells 20 may be connected through the busbar component so as to achieve electrical connection between the plurality of battery cells 20.

Each battery cell 20 may be a secondary battery or a primary battery, and may also be a lithium-sulfur battery, a sodium-ion battery or a magnesium-ion battery, but not limited thereto. The battery cell 20 can be in a cuboid shape, a cylinder shape, a prism shape or other shapes. As an example, in FIG. 3, the battery cell 20 is of a cuboid structure.

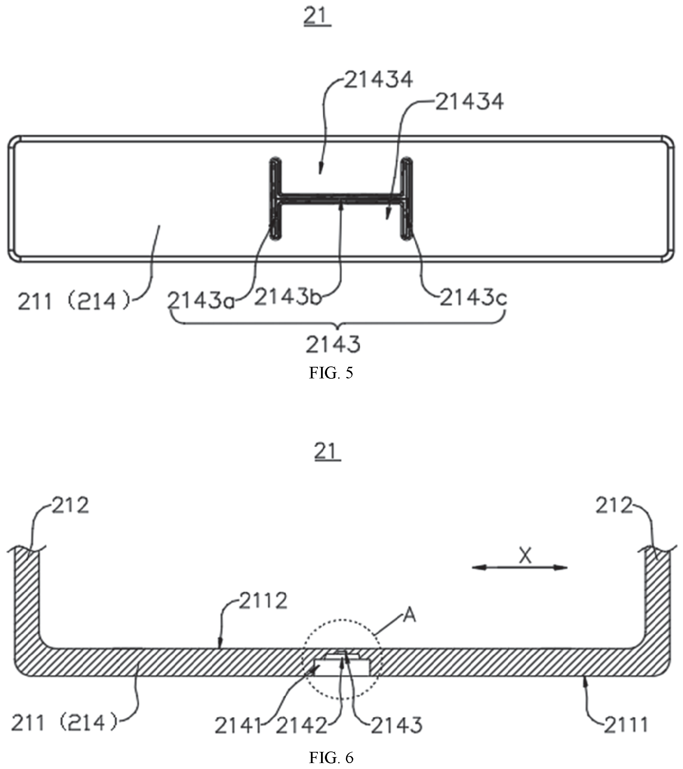

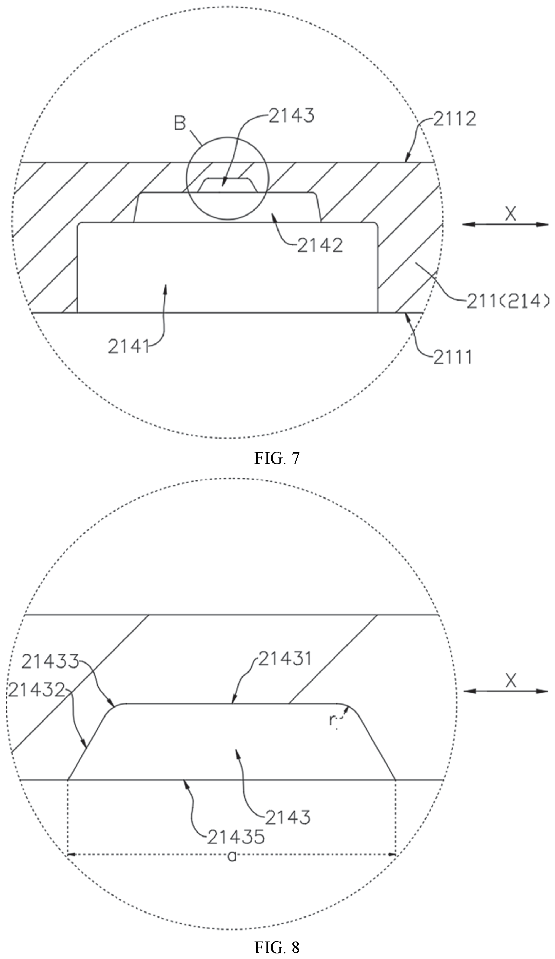

Referring to FIG. 3, FIG. 4, FIG. 5, FIG. 6, FIG. 7 and FIG. 8, FIG. 4 is an exploded structural view of a battery cell 20 provided in some embodiments of the present application. FIG. 5 is a bottom view of a shell 21 of a battery cell 20 according to some embodiments of the present application. FIG. 6 is a partial sectional view of a shell 21 of a battery cell 20 according to some embodiments of the present application. FIG. 7 is a partial enlarged view of a part A in the shell 21 shown in FIG. 6. FIG. 8 is a partial enlarged view of a part B in FIG. 7. The embodiments of the present application provide a battery cell 20. The battery cell 20 includes a shell 21 and a pressure relief structure 214. The shell 21 has a wall portion 211, and the pressure relief structure 214 is arranged on the wall portion 211. The pressure relief structure 214 is provided with a first groove 2143, and the pressure relief structure 214 is configured to be capable of rupturing along at least a portion of the first groove 2143 during the pressure relief of the battery cell 20. The first groove 2143 includes at least one groove segment, which includes a groove bottom surface 21431 and two groove side surfaces 21432. The two groove side surfaces 21432 are arranged opposite to each other along the width direction of the groove segment, and a transition between the groove bottom surface 21431 and at least one groove side surface 21432 is implemented by a rounded corner 21433.

The battery cell 20 refers to the smallest unit constituting a battery 100.

The shell 21 includes an end cover 216 and a case 215, the case 215 has an opening 2151, and the end cover 216 is connected to the case 215 and closes the opening 2151.

The end cover 216 refers to a component that covers the opening 2151 of the case 215 to isolate the internal environment of the battery cell 20 from the external environment. Without limitation, the shape of the end cover 216 may be adapted to the shape of the case 215 to fit the case 215. Optionally, the end cover 216 may be made of a material (such as aluminum alloy) with a certain hardness and strength, and in this way, the end cover 216 is not easily deformed when being subjected to extrusion and collisions, such that the battery cell 20 is capable of having a higher structural strength, and the safety performance can also be improved. The end cover 216 may be made of various materials, such as copper, iron, aluminum, stainless steel, aluminum alloy, and plastic, which is not particularly limited in the embodiments of the present application. In some embodiments, the battery cell 20 further includes an insulating member. The insulating member is arranged on an inner side of the end cover 216, and the insulating member may be configured to isolate an electrical connection component in the case 215 from the end cover 216, thereby reducing the risk of short circuit. For example, the insulating member may be made of plastic, rubber, and the like.

The case 215 is a component configured to fit the end cover 216 to form the internal environment of the battery cell 20, where the formed internal environment can be used for accommodating the electrode assembly 22, an electrolyte solution, and other components. The case 215 and the end cover 216 may be separate components, the case 215 may be provided with the opening 2151, and the internal environment of the battery cell 20 is formed by making the end cover 216 cover the opening 2151 at the opening 2151. Without limitation, the end cover 216 and the case 215 may also be integrated. Specifically, the end cover 216 and the case 215 may form a common connecting surface before other components enter the shell. When the interior of the case 215 is required to be encapsulated, the case 215 is covered by the end cover 216. The case 215 may be of various shapes and dimensions, such as a cuboid, a cylinder, and a hexagonal prism. Specifically, the shape of the case 215 may be determined according to the specific shape and dimension of the electrode assembly 22. The case 215 may be made of various materials, such as copper, iron, aluminum, stainless steel, aluminum alloy, and plastic, which is not particularly limited in the embodiments of the present application.

The electrode assembly 22 is a component of the battery cell 20 where an electrochemical reaction occurs. One or more electrode assemblies 22 may be included within the shell 21. The electrode assembly 22 is mainly formed by winding or stacking a positive electrode plate and a negative electrode plate, and a separator is generally arranged between the positive electrode plate and the negative electrode plate. The portions, with active materials, of the positive electrode plate and the negative electrode plate constitute a main body part of the electrode assembly 22, and the portions, without the active materials, of the positive electrode plate and the negative electrode plate respectively constitute tabs 221. The positive tab and the negative tab may be located at one end of the main body part together or located at two ends of the main body part respectively. In a charging or discharging process of the battery 100, the positive electrode active material and the negative electrode active material react with the electrolyte solution.

The wall portion 211 may be the end cover 216 of the shell 21, or may also be a wall of the case 215 of the shell 21. As an example, in FIG. 3 and FIG. 4, the wall portion 211 is a bottom wall of the case 215 arranged opposite to the end cover 216. In another embodiment, the wall portion 211 may also be a side wall 212 of the case 215 that is adjacent to and connected to the end cover 216.

The pressure relief structure 214 may be a component mounted on the wall portion 211. In this case, the pressure relief structure 214 and the wall portion 211 are separately arranged and connected. For example, the pressure relief structure 214 is a rupture disk mounted on the wall portion 211. The pressure relief structure 214 may also be a part of the wall portion 211. In this case, the pressure relief structure 214 and the wall portion 211 are formed integrally. The wall of the shell 21 that is the wall portion 211 can be determined based on the position where the pressure relief structure 214 is arranged. For example, when the pressure relief structure 214 is arranged on the end cover 216, the end cover 216 is the wall portion 211. When the pressure relief structure 214 is arranged on the bottom wall of the case 215, the bottom wall is the wall portion 211. When the pressure relief structure 214 is arranged on the side wall 212 of the case 215, the side wall 212 is the wall portion 211.

The first groove 2143 plays a role in pressure relief and configured to make the pressure relief structure 214 to rupture along the first groove 2143 when the internal pressure or temperature of the battery cell 20 reaches a fracture initiation pressure so as to release the internal pressure of the battery cell 20.

Optionally, the first groove 2143 may be arranged on one side of the pressure relief structure 214 facing the interior of the shell 21, or may be arranged on one side of the pressure relief structure 214 facing away from the interior of the shell 21. For example, in FIG. 5 and FIG. 6, the first groove 2143 is arranged on the side of the pressure relief structure 214 facing away from the interior of the shell 21, that is, the first groove 2143 is arranged in a surface of the side of the pressure relief structure 214 facing away from the interior of the shell 21.

The first groove 2143 can be formed by various processing methods, such as stamping and cold heading. The first groove 2143 may be formed by stamping or cold heading, so that the groove wall of the first groove 2143 will undergo work hardening (the grain arrangement changes, thus resulting in lattice distortion, reducing the metal plasticity, and increasing the material hardness), so that the groove has an enhanced ability to resist an external impact, and is less likely to be damaged by the external impact. This helps reduce the risk of leakage from the pressure relief structure 214.

The first groove 2143 may include one groove segment, two groove segments, three groove segments, or more than three groove segments. The groove segments may extend along a straight trajectory or along an arc-shaped trajectory. The groove segment includes a groove bottom surface 21431 and two groove side surfaces 21432. The groove bottom surface 21431 is the surface of the groove segment that is opposite to the groove opening and farthest from the groove opening. One end of the groove side surface 21432 is connected to the groove bottom surface 21431, and the other end of the groove side surface 21432 is used to enclose and form the groove opening. Along the width direction of the groove segment, the two groove side surfaces 21432 are arranged opposite to each other.

Referring to FIG. 6, FIG. 7, and FIG. 8, the width direction of the groove segment corresponds to the X direction shown in the figures.

"The transition between the groove bottom surface 21431 and at least one groove side surface 21432 is implemented by the rounded corner 21433" can also be understood as: the groove bottom surface 21431 and at least one groove side surface 21432 are connected by a circular arc surface. A transition between the groove bottom surface 21431 and one groove side surface 21432 may be implemented by the rounded corner 21433, or transitions between the groove bottom surface 21431 and both of the groove side surfaces 21432 may be implemented by the rounded corner 21433.

The battery cell 20 is provided with the pressure relief structure 214, and the pressure relief structure 214 is provided with the first groove 2143; the pressure relief structure 214 is capable of rupturing along at least a portion of the first groove 2143 during pressure relief of the battery cell 20, thereby facilitating the release of pressure inside the battery cell 20. The first groove 2143 includes at least one groove segment, which includes a groove bottom surface 21431 and two groove side surfaces 21432 arranged opposite to each other along the width direction of the groove segment. By implementing the transition between the groove bottom surface 21431 and at least one groove side surface 21432 using the rounded corner 21433, it is beneficial to alleviating stress concentration at the groove segment, reduce strain at the groove segment, and reducing the risk of premature rupturing of the first groove 2143, thereby helping to improve the service life of the battery cell 20.

In some embodiments, referring to FIG. 4, the battery cell 20 may further include an electrode terminal 23. The electrode terminal 23 is mounted on the shell 21 in an insulated manner, and the electrode terminal 23 is electrically connected to the electrode assembly 22, to input or output electric energy of the battery cell 20.

It should be noted that the electrode terminal 23 is mounted on the shell 21 in an insulated manner, that is, no electrical connection is formed between the electrode terminal 23 and the shell 21.

In FIG. 3 and FIG. 4, the battery cell 20 includes two electrode terminals 23, and the two electrode terminals 23 are arranged at an interval on the end cover 216. Correspondingly, each electrode assembly 22 has two tabs 221, and the two tabs 221 have opposite polarities. The two electrode terminals 23 are electrically connected to the two tabs 221 of the electrode assembly 22, respectively, to realize the input or output of the positive and negative electrodes of the battery cell 20.

For example, the electrode terminal 23 may be made of a variety of materials. For example, the electrode terminal 23 may be made of copper, iron, aluminum, steel, aluminum alloy, or the like.

Optionally, the electrode terminal 23 may be mounted on the shell 21 in various structures. For example, in FIG. 3 and FIG. 4, the two electrode terminals 23 are both mounted on the end cover 216 of the shell 21. Of course, the structure of the battery cell 20 is not limited to this. In other embodiments, the two electrode terminals 23 may also be mounted on the case 215 of the shell 21. Similarly, for the two electrode terminals 23, one electrode terminal 23 may be mounted on the case 215 of the shell 21 and the other electrode terminal 23 may be mounted on the end cover 216 of the shell 21.

In some embodiments, referring to FIG. 4, the battery cell 20 may further include two current collecting members 24, both of the two current collecting members 24 are arranged in the shell 21, and each of the current collecting members 24 is used to connect one electrode terminal 23 to tabs 221 with the same polarity in a plurality of electrode assemblies 22 to achieve the electrical connection between the electrode terminal 23 and the electrode assemblies 22, which is conducive to reducing the difficulty of assembling between the tabs 221 and the electrode terminal 23.

For example, the current collecting member 24 may be made of a variety of materials. For example, the current collecting member 24 may be made of copper, iron, aluminum, steel, aluminum alloy, or the like.

Referring to FIG. 3, FIG. 4, FIG. 5, FIG. 6, FIG. 7 and FIG. 8, in some embodiments, the radius of the rounded corner 21433 is r, and the width of the groove opening 21435 of the groove segment is a, satisfying: 0.08≤r/a≤0.4.

r represents the radius of the rounded corner 21433. a represents the length of the groove opening 21435 of the groove segment along the width direction of the groove segment, which is also the width of the groove opening 21435 of the groove segment. r/a represents the ratio of the radius of the rounded corner 21433 to the width of the groove opening 21435 of the groove segment.

The ratio of the radius of the rounded corner 21433 to the width of the groove opening 21435 of the groove segment can be: r/a = 0.08, 0.1, 0.12, 0.14, 0.16, 0.18, 0.2, 0.22, 0.24, 0.26, 0.28, 0.3, 0.32, 0.34, 0.36, 0.38, 0.4, or the like.

When r/a≥0.08, the radius of the rounded corner 21433 is relatively large, which has a good effect on alleviating stress concentration at the groove segment, effectively reducing the strain at the groove segment, reducing the risk of premature rupturing of the first groove 2143, and thus helping to improve the service life of the battery cell 20. When r/a≤0.4, the radius of the rounded corner 21433 is not excessively large, and the degree of stress concentration at the groove segment is not excessively low; this facilitates the timely rupturing of the groove segment during pressure relief of the battery cell 20, thereby helping to improve the timeliness of pressure relief of the battery cell 20. Therefore, when 0.08≤r/a≤0.4, both the service life of the battery cell 20 and the timeliness of pressure relief of the battery cell 20 can be taken into account.

Optionally, 0.12≤r/a≤0.3.

The ratio of the radius of the rounded corner 21433 to the width of the groove opening 21435 of the groove segment can be: r/a = 0.12, 0.13, 0.14, 0.15, 0.16, 0.17, 0.18, 0.19, 0.2, 0.21, 0.22, 0.23, 0.24, 0.25, 0.26, 0.27, 0.28, 0.29, 0.3, or the like.

When r/a≥0.12, the radius of the rounded corner 21433 is larger, which has a better effect on alleviating stress concentration at the groove segment, effectively reducing the strain at the groove segment, reducing the risk of premature rupturing of the first groove 2143, and thus helping to improve the service life of the battery cell 20. When r/a≤0.3, the radius of the rounded corner 21433 is not excessively large, and the degree of stress concentration at the groove segment is not excessively low; this facilitates the timely rupturing of the groove segment during pressure relief of the battery cell 20, thereby helping to improve the timeliness of pressure relief of the battery cell 20. Therefore, when 0.12≤r/a≤0.3, both the service life of the battery cell 20 and the timeliness of pressure relief of the battery cell 20 can be taken into account.

In order to make the technical problems, technical solutions and beneficial effects solved by the embodiment of the present application clearer, the following shows further detailed description in combination with Embodiments 1-10. It is clear that the described embodiments are only some, rather than all, of the embodiments of the present application. The following description of at least one exemplary embodiment is actually merely illustrative and by no means constitutes any limitation on the present application and the use thereof. All other embodiments obtained by those of ordinary skill in the art based on the embodiments of the present application without involving any creative effort shall fall within the scope of protection of the present application.

### Embodiment 1

Battery cells 20 in various embodiments are all prepared and tested according to a method below.

### I. Preparation of battery cell 20

### 1) Preparation of positive electrode plate

Positive electrode slurry is prepared from a positive electrode active material LiNi_{0.7}Co_{0.1}Mn_{0.1}O₂, a conductive agent Super P and a binder polyvinylidene fluoride (PVDF) in N-methyl pyrrolidone (NMP), in which, the positive electrode slurry contains 50wt% of solid, and the mass ratio of LiNi_{0.7}Co_{0.1}Mn_{0.1}O₂ to Super P to PVDF in the solid component is 8:1:1; and the upper and lower surfaces of an aluminum foil of a current collector are coated with the positive electrode slurry, dried at 85°C, then subjected to cold pressing, trimming, slicing and stripping, and finally dried under a vacuum condition of 85°C for 4 h to obtain the positive electrode plate.

### 2) Preparation of negative electrode plate

Graphite, a conductive agent Super P, a thickener carboxymethyl cellulose (CMC) and a binder Styrene Butadiene Rubber (SBR) are uniformly mixed in deionized water to prepare negative electrode slurry, in which, the negative electrode slurry contains 30wt% of solid, and the mass ratio of graphite to silicon oxide to Super P to CMC to the binder Styrene Butadiene Rubber (SBR) in the solid component is 88:7:3:2; the upper and lower surfaces of the aluminum foil of the current collector are coated with the negative electrode slurry, dried at 85°C, then subjected to cold pressing, trimming, slicing and stripping, and finally dried under a vacuum condition of 120°C for 12 h to prepare a negative electrode plate.

### 3) Preparation of electrolyte

In an argon atmosphere glove box (H₂O<0.1ppm, O₂<0.1ppm), fully dried electrolyte salt LiPF₆ is dissolved into a mixed solvent (the mixed solvent includes ethylene carbonate (EC) and diethyl carbonate (DEC), and ethylene carbonate (EC) and diethyl carbonate (DEC) are mixed at a mass ratio of 50:50), and uniformly mixed to obtain liquid electrolyte with a concentration of 1 mol/L.

### 4) Spacer

A 16µm polyethylene film is used as the spacer.

### 5) Preparation of battery cell 20

The positive electrode plate, the separator, and the negative electrode plate are stacked in order, so that the separator is located between the positive electrode plate and the negative electrode plate to isolate the positive electrode from the negative electrode, and an electrode assembly 22 is obtained by winding them. The electrode assembly 22 is placed in an aluminum shell 21, and the prepared electrolyte is injected into the dried shell 21, followed by processes such as encapsulation, standing, formation, shaping, and capacity testing to complete the preparation of the battery cell 20. Moreover, a first groove 2143 is formed on a wall portion 211 of the shell 21 of the battery cell 20. The shell 21 of the battery cell 20 of Embodiment 1 is of a cuboid structure, and a case 215 of the shell 21 is a structure with an opening 2151 formed at one end, a wall of the case 215 opposite to an end cover 216 is the wall portion 211, and the wall portion 211 is a rectangular wall. The first groove 2143 is of an "H"-shaped structure, that is, the first groove 2143 includes a first groove segment 2143a, a second groove segment 2143b, and a third groove segment 2143c. The second groove segment 2143b is connected between the first groove segment 2143a and the third groove segment 2143c, and the second groove segment 2143b is located in the middle of the wall portion 211 in the width direction of the wall portion 211. The battery cell 20 has a thickness of 39 mm, a width of 203 mm, a shoulder height (a dimension of the shell 21 in a height direction) of 122.7 mm, and a capacity of 185 Ah.

The radius r of the rounded corner 21433 and the width a of the groove opening 21435 of the groove segment are both obtained via tomographic scanning followed by software-based measurement.

The preparation methods of the battery cells 20 in Embodiments 2-10 are the same as that in Embodiment 1, except that the ratios of the radius r of the rounded corner 21433 to the width a of the groove opening 21435 of the groove segment are different, as detailed in Table 1.

### II. Testing of Performance Parameters

### 1. Method for measuring the number of fatigue cycles of battery cell 20

1) A special test fixture is prepared, specifically, the fixture includes three 10 mm steel plates (a first steel plate, a second steel plate, and a third steel plate), each steel plate can completely cover the large surface of the battery cell 20 (the large surface of the battery cell 20 refers to the surface with the largest area among the outer surfaces of the shell 21), the first steel plate and the third steel plate are positioned at two ends of the fixture and are connected and fixed by bolts, the second steel plate is positioned between the first steel plate and the third steel plate, and the second steel plate is restrained by a guide rail and can only translate in the thickness direction of the second steel plate.
2) The battery cell 20 is mounted between the first steel plate and the second steel plate, supporting structures are placed between the large surface on one side of the battery cell 20 and the first steel plate and between the large surface on the other side of the battery cell 20 and the second steel plate, in which, the supporting structures can be heat insulation pads or water cooling plates (the material/structure between two adjacent battery cells 20 in an actual battery 100 is kept consistent), and the supporting structures can be compressed to provide an expansion space for the battery cell 20 in the charge-discharge cycle aging process; and the large surface of the battery cell 20 is attached to the supporting structures, the first steel plate is attached to the corresponding supporting structure, the second steel plate is attached to the corresponding supporting structure, and a pressure sensor is arranged between the second steel plate and the third steel plate.
3) The position of the second steel plate is adjusted by adjusting a pre-tightening force of the bolts, the pressure sensor is observed so that an initial extrusion force on the battery cell 20 is 2000 N, and the positive electrode terminal and the negative electrode terminal of the battery cell 20 are connected to a charge-discharge device.
4) The battery cell 20 and the fixture are placed in a constant temperature environment of 25±2°C, and the test starts after the battery cell 20 reaches temperature equilibrium.
5) The test steps are carried out in accordance with Chapter 6.4 "Standard Cycle Life" of GBT31484-2015 (Cycle Life Requirements and Test Methods for Power Batteries 100 of Electric Vehicles), with a test cycle termination condition changed to "do not stop the test until the first weak portion 2144 arranged on the wall portion 211 is damaged".

Specifically, the test is performed according to the following steps:
a) Perform discharging to 2.8 v with a current 1I₁(A);
b) Let it stand for no less than 30 minutes or according to a manufacturer's specified resting conditions;
c) Perform charging in accordance with method 6.1.1.3 of GBT31484-2015 (Cycle Life Requirements and Test Methods for Power Batteries 100 of Electric Vehicles);
d) Let it stand for no less than 30 minutes;
e) Perform discharging to 2.8 v with the current 1I₁(A); and
f) Repeat steps b) to e), and do not stop the test until the first groove 2143 arranged on the wall portion 211 is damaged.

That is, during the test, the region on the wall portion 211 of the battery cell 20 where the first groove 2143 is arranged is continuously observed until the region is damaged and leaks, and the number of cycles is recorded as the number of fatigue cycles of the battery cell 20. The larger the number of fatigue cycles of the battery cell 20 is, the smaller the probability of valve opening and liquid leakage caused by gas production of the battery cell 20 during long-term use process is, and the longer the service life is.

### 2. Method for testing thermal runaway of battery cell 20

1. Selecting a heating plate according to the size of the battery cell 20, in which, the size of the heating plate is required to cover the large surface (coverage area: ≥60%) of the battery cell 20 as much as possible;
2. Charging the battery cell 20 to 100% SOC before testing and ensure that the temperature of the battery cell 20 is 25±5°C;
3. Sensor arrangement:
   1) Temperature sensing wire arrangement: one layer of Teflon is attached to the central region of each of the two large surfaces of the battery cell 20, a temperature sensing wire is arranged on the Teflon, then another layer of Teflon is attached;
   2) Voltage sampling wire arrangement: one layer of Teflon is attached to each of the positive electrode terminal, the negative electrode terminal, and the shell 21 of the battery cell 20; and the voltage sampling wire is arranged on the Teflon, and then another layer of Teflon is attached;
   3) Air pipe arrangement: the wall portion 211 of the battery cell 20 is drilled, in the length direction of the wall portion 211, the drilling position is located at a midpoint between the first groove 2143 and a side surface of the case 215 (an outer surface of a wall of the case 215 adjacent to the wall portion 211 in the length direction of the wall portion 211), an air pipe is inserted into the hole and sealed, and the air pipe is connected to an air pressure sensor; and
   4) Connecting the temperature sensing wire, the voltage sampling wire and the air pressure sensor to a data acquisition instrument to acquire and analyze data in real time, in which, the acquisition frequency of the data acquisition instrument is: ≤0.1S;
4. Assembling a fixture so that the fixture completely covers the large surface of the battery cell 20, with a clamping force of 3000N, and the arrangement order of the fixture, the heating plate, and the battery cell 20 is: fixture + heating plate + battery cell 20 + fixture;
5. Test: a plurality of channels is opened to collect temperature, voltage, and air pressure data, and then the heating plate is turned on at a power of 500 W to heat the battery cell 20 until thermal runaway occurs in the battery cell 20.
6. Obtaining a pressure gas retention duration of the battery cell 20: Determine a thermal runaway moment and a valve opening moment according to the temperature, voltage, and air pressure data collected from the plurality of channels, and obtain the pressure gas retention duration of the battery cell 20 according to an equation: pressure gas retention duration = valve opening moment - thermal runaway moment.

Thermal runaway determination criteria: a) A triggered object produces a voltage drop, and the drop exceeds 25% of an initial voltage; b) A temperature at a detection point reaches a maximum operating temperature specified by a manufacturer; and c) At the detection point, a temperature rise rate is dT/dt≥1°C/s and lasts for more than 3s. When a) and c) or b) and c) occur, it is determined that thermal runaway has occurred, and the thermal runaway moment is determined.

Determination of valve opening moment: When the air pressure drops by more than 25%, it can be determined that the valve is open (the wall portion 211 ruptures along the first groove 2143), and the moment when the air pressure begins to drop is the valve opening moment.

### III. Test Results

Experimental results of Embodiments 1-10 are shown in Table 1 below.

**Table 1**

| Serial number | r (mm) | a (mm) | r/a | Number of fatigue cycles of battery cell 20 | Gas retention duration of battery cell 20 (s) |
|---|---|---|---|---|---|
| Embodiment 1 | 0.03 | 0.4 | 0.075 | 882 | 1.1 |
| Embodiment 2 | 0.04 | 0.38 | 0.105 | 1146 | 1.2 |
| Embodiment 3 | 0.05 | 0.36 | 0.139 | 1337 | 1.5 |
| Embodiment 4 | 0.06 | 0.34 | 0.177 | 1568 | 1.9 |
| Embodiment 5 | 0.07 | 0.32 | 0.219 | 1813 | 2.1 |
| Embodiment 6 | 0.08 | 0.30 | 0.267 | 2127 | 2.5 |
| Embodiment 7 | 0.09 | 0.28 | 0.321 | 2331 | 3.0 |
| Embodiment 8 | 0.10 | 0.26 | 0.385 | 2602 | 3.6 |
| Embodiment 9 | 0.11 | 0.25 | 0.440 | 2801 | 4.2 |
| Embodiment 10 | 0.12 | 0.24 | 0.500 | 2952 | 5.1 |

Please refer to Table 1. As shown in Embodiment 1, when r/a≥0.08, the radius of the rounded corner 21433 is relatively small, the effect of alleviating stress concentration at the groove segment is relatively poor, the number of fatigue cycles of the battery cell 20 is relatively small, and the service life of the battery cell 20 is relatively short.

Please refer to Table 1. As shown in Embodiments 2-8, when 0.08≤r/a≤0.4, the number of fatigue cycles of the battery cell 20 is relatively large, the service life of the battery cell 20 is relatively long, gas retention duration of the battery cell 20 is relatively short, and the timeliness of pressure relief of the battery cell 20 is relatively good.

Please refer to Table 1. As shown in Embodiments 9-10, when r/a≥0.4, the number of fatigue cycles of the battery cell 20 is relatively large, the service life of the battery cell 20 is relatively long, gas retention duration of the battery cell 20 is also relatively long, and the timeliness of pressure relief of the battery cell 20 is relatively poor.

In some embodiments, 0.03 mm≤r≤0.15 mm.

The radius of the rounded corner 21433 can be: r=0.03 mm, 0.04 mm, 0.05 mm, 0.06 mm, 0.07 mm, 0.08 mm, 0.09 mm, 0.1 mm, 0.11 mm, 0.12 mm, 0.13 mm, 0.14 mm, 0.15 mm, or the like.

When r≥0.03 mm, the radius of the rounded corner 21433 is relatively large, which has a good effect on alleviating stress concentration at the groove segment, effectively reducing the strain at the groove segment, reducing the risk of premature rupturing of the first groove 2143, and thus helping to improve the service life of the battery cell 20. When r≤0.15 mm, the radius of the rounded corner 21433 is not excessively large, and the degree of stress concentration at the groove segment is not excessively low; this facilitates the timely rupturing of the groove segment during pressure relief of the battery cell 20, thereby helping to improve the timeliness of pressure relief of the battery cell 20. Therefore, when 0.03 mm≤r≤0.15 mm, both the service life of the battery cell 20 and the timeliness of pressure relief of the battery cell 20 can be taken into account.

Optionally, 0.06 mm≤r≤0.1 mm.

The radius of the rounded corner 21433 can be: r=0.06 mm, 0.065 mm, 0.07 mm, 0.075 mm, 0.08 mm, 0.085 mm, 0.09 mm, 0.095 mm, 0.1 mm, or the like.

When r≥0.06 mm, the radius of the rounded corner 21433 is larger, which has a better effect on alleviating stress concentration at the groove segment, effectively reducing the strain at the groove segment, reducing the risk of premature rupturing of the first groove 2143, and thus helping to improve the service life of the battery cell 20. When r≤0.1, the radius of the rounded corner 21433 is not excessively large, and the degree of stress concentration at the groove segment is not excessively low; this facilitates the timely rupturing of the groove segment during pressure relief of the battery cell 20, thereby helping to improve the timeliness of pressure relief of the battery cell 20. Therefore, when 0.06 mm≤r≤0.1 mm, both the service life of the battery cell 20 and the timeliness of pressure relief of the battery cell 20 can be taken into account.

In some embodiments, 0.08 mm≤a≤0.4 mm.

The width of the groove opening 21435 of the groove segment can be: a=0.08 mm, 0.1 mm, 0.12 mm, 0.14 mm, 0.16 mm, 0.18 mm, 0.2 mm, 0.22 mm, 0.24 mm, 0.26 mm, 0.28 mm, 0.3 mm, 0.32 mm, 0.34 mm, 0.36 mm, 0.38 mm, 0.4 mm, or the like.

When a≥0.08 mm, the width of the groove opening 21435 of the groove segment is relatively large, which is conducive to timely rupturing of the groove segment during pressure relief of the battery cell 20, and is conducive to improving the timeliness of pressure relief of the battery cell 20. When a≤0.4 mm, the width of the groove opening 21435 of the groove segment is not excessively large, then the risk of rupturing of the groove segment due to the change in the air pressure inside the battery cell 20 can be reduced, which is conducive to improving the reliability of the battery cell 20. Therefore, when 0.08 mm≤a≤0.4 mm, the width of the groove opening 21435 of the groove segment is moderate in dimension, the groove segment does not easily rupture due to the change in the air pressure inside the battery cell 20, and is capable of rupturing in time during the pressure relief of the battery cell 20, which is conducive to improving the timeliness of pressure relief of the battery cell 20.

Optionally, 0.26 mm≤a≤0.34 mm.

The width of the groove opening 21435 of the groove segment can be: a=0.26 mm, 0.27 mm, 0.28 mm, 0.29 mm, 0.3 mm, 0.31 mm, 0.32 mm, 0.33 mm, 0.34 mm, or the like.

When a≥0.26 mm, the width of the groove opening 21435 of the groove segment is larger, which is conducive to timely rupturing of the groove segment during pressure relief of the battery cell 20, and is conducive to improving the timeliness of pressure relief of the battery cell 20. When a≤0.34 mm, the width of the groove opening 21435 of the groove segment is not excessively large, then the risk of rupturing of the groove segment due to the change in the air pressure inside the battery cell 20 can be reduced, which is conducive to improving the reliability of the battery cell 20. Therefore, when 0.26 mm≤a≤0.34 mm, the reliability of the battery cell 20 and the timeliness of pressure relief are better taken into account.

Referring to FIG. 3, FIG. 4, FIG. 5, FIG. 6, FIG. 7 and FIG. 8, in some embodiments, the pressure relief structure 214 has a first surface 2111 and a second surface 2112 arranged opposite to each other in the thickness direction of the wall portion 211. The pressure relief structure 214 is provided with a plurality of steps of grooves arranged sequentially in a direction from the first surface 2111 to the second surface 2112. In two adjacent steps of grooves, the step of groove far from the first surface 2111 is arranged on a groove bottom surface 21431 of the step of groove close to the first surface 2111. The step of groove farthest from the first surface 2111 among the plurality of steps of grooves is the first groove 2143.

The pressure relief structure 214 has the first surface 2111 and the second surface 2112 arranged opposite to each other in the thickness direction of the wall portion 211. When the first surface 2111 is a surface of the pressure relief structure 214 facing away from the interior of the shell 21, the second surface 2112 is a surface of the pressure relief structure 214 facing the interior of the shell 21. When the first surface 2111 is a surface of the pressure relief structure 214 facing the interior of the shell 21, the second surface 2112 is a surface of the pressure relief structure 214 facing away from the interior of the shell 21.

The pressure relief structure 214 is provided with the plurality of steps of grooves, the plurality of steps of grooves are sequentially arranged on the pressure relief structure 214 in the direction from the first surface 2111 to the second surface 2112, and contours of the groove bottom surfaces 21431 of the plurality of steps of grooves decrease step by step. The cross section of the groove may be in various shapes, such as a rectangle or a circle. The groove on the pressure relief structure 214 can be formed by various processing methods, such as stamping and cold heading.

The step of groove farthest from the first surface 2111 among the plurality of steps of grooves is the first groove 2143.

For example, as shown in FIG. 6 and FIG. 7, the pressure relief structure 214 is provided with three steps of grooves, namely, the first step of groove 2141, the second step of groove 2142 and the third step of groove. During processing and forming, the first step of groove 2141 can be formed by punching on the first surface 2111 first, the second step of groove 2142 can be formed by punching on a groove bottom surface 21431 of the first step of groove 2141, and finally the third step of groove can be formed by punching on a groove bottom surface 21431 of the second step of groove 2142. At this point, the third step of groove is the step of groove furthest from the first surface 2111 among the plurality of steps of grooves, that is, the third step of groove is the first groove 2143.

The plurality of steps of grooves are sequentially arranged on the pressure relief structure 214 in the direction from the first surface 2111 to the second surface 2112. During forming, the plurality of steps of grooves can be sequentially formed on the pressure relief structure 214 in the direction from the first surface 2111 to the second surface 2112.

The plurality of steps of grooves are sequentially arranged on the pressure relief structure 214 in the direction from the first surface 2111 to the second surface 2112. During forming, the plurality of steps of grooves can be formed step by step, thereby reducing a forming force on the pressure relief structure 214 and reducing a risk of cracks in the pressure relief structure 214. The pressure relief structure 214 is not prone to failure due to cracks at the positions where the grooves are set, thereby improving the reliability of the battery cell 20. The plurality of steps of grooves may be formed by stamping, cold heading, or the like, so that the groove wall of the groove will undergo work hardening (the grain arrangement changes, thus resulting in lattice distortion, reducing the metal plasticity, and increasing the material hardness), so that the groove has an enhanced ability to resist an external impact, and is less likely to be damaged by the external impact. This helps reduce the risk of leakage from the pressure relief structure 214.

In some embodiments, the first surface 2111 is a surface of the pressure relief structure 214 facing away from the interior of the shell 21.

The first surface 2111 is the surface of the pressure relief structure 214 facing away from the interior of the shell 21, that is, the first surface 2111 is an outer surface of the pressure relief structure 214. At this point, the second surface 2112 is the surface of the pressure relief structure 214 facing the interior of the shell 21, that is, the second surface 2112 is an inner surface of the pressure relief structure 214.

It should be noted that when the pressure relief structure 214 is integrally formed with the wall portion 211, the first surface 2111 is an outer surface of the wall portion 211, and the second surface 2112 is an inner surface of the wall portion 211.

By arranging the first groove 2143 on the surface of the pressure relief structure 214 facing away from the interior of the shell 21, the tension that the first weak portion needs to overcome when rupturing is small, and it is easy to rupture.

In some embodiments, the first groove 2143 includes a plurality of groove segments connected together, the plurality of groove segments jointly defining at least one predetermined pressure relief region 21434. The predetermined pressure relief region 21434 is configured to be openable when the pressure relief structure 214 ruptures along at least a portion of the first groove 2143 to release the internal pressure of the battery cell 20.

The first groove 2143 may include two groove segments, three groove segments, four groove segments, or more than four groove segments. The groove segment can be a straight groove extending along a straight trajectory, or it can be an arc-shaped groove extending along an arc-shaped trajectory.

The plurality of groove segments jointly define at least one predetermined pressure relief region 21434. During the pressure relief of the battery cell 20, the first weak portion 2144 ruptures along an edge of the predetermined pressure relief region 21434, so that the predetermined pressure relief region 21434 can be opened for pressure relief.

The plurality of groove segments define a predetermined pressure relief region 21434; the pressure relief structure 214 is capable of rupturing along the plurality of groove segments during pressure relief of the battery cell 20, so as to open the predetermined pressure relief region 21434 to release the pressure inside the battery cell 20. Furthermore, the connection position between the two groove segments is weaker, making it easy to rupture to open the predetermined pressure relief region 21434 for pressure relief, which can further increase the pressure relief area and pressure relief rate of the battery cell 20.

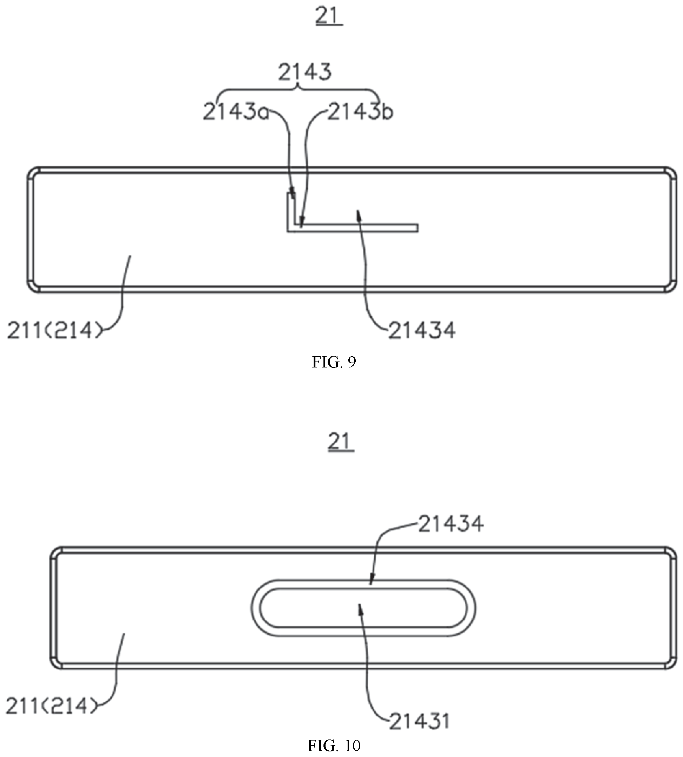

Referring to FIG. 9, FIG. 9 is a bottom view of a shell 21 of a battery cell 20 according to some other embodiments of the present application. In some embodiments, the plurality of groove segments include a first groove segment 2143a and a second groove segment 2143b, where the first groove segment 2143a is connected with the second groove segment 2143b, and the first groove segment 2143a and the second groove segment 2143b jointly define at least one predetermined pressure relief region 21434.

A line connecting a free end of the first groove segment 2143a and a free end of the second groove segment 2143b is a first connecting line. The enclosed region jointly surrounded by the first groove segment 2143a, the second groove segment 2143b, and the first connecting line is the predetermined pressure relief region 21434.

The first groove segment 2143a and the second groove segment 2143b jointly define the predetermined pressure relief region 21434. The first groove segment 2143a and the second groove segment 2143b are structures arranged along the edge of the predetermined pressure relief region 21434, so that during the pressure relief of the battery cell 20, the two weak sections can rupture along the edge of the predetermined pressure relief region 21434.

For example, in FIG. 9, one end of the first groove segment 2143a is connected to one end of the second groove segment 2143b, so that the first groove segment 2143a and the second groove segment 2143b form a first groove 2143 of an "L"-shaped structure. The first connecting line connects two ends of the L-shaped structure. Of course, in another embodiment, one end of the second groove segment 2143b may also be connected to a middle position of the first groove segment 2143a, so that the pressure relief structure 214 forms a predetermined pressure relief region 21434 on each of two sides of the second groove segment 2143b.

The first groove segment 2143a and the second groove segment 2143b are interconnected structures, so that the first groove segment 2143a and the second groove segment 2143b jointly define at least one predetermined pressure relief region 21434. On one hand, it can increase the pressure relief area of the battery cell 20, thereby enhancing the pressure relief rate of the battery cell 20. On the other hand, the connection position between the first groove segment 2143a and the second groove segment 2143b is weaker, making it easy to rupture to open the predetermined pressure relief region 21434 to relieve the internal pressure of the battery cell 20.

Referring to FIG. 3, FIG. 4, FIG. 5, FIG. 6, FIG. 7 and FIG. 8, in some embodiments, the plurality of groove segments include a first groove segment 2143a, a second groove segment 2143b, and a third groove segment 2143c. The first groove segment 2143a and the third groove segment 2143c are arranged opposite to each other. The second groove segment 2143b connects the first groove segment 2143a and the third groove segment 2143c. The first groove segment 2143a, the second groove segment 2143b, and the third groove segment 2143c jointly define at least one predetermined pressure relief region 21434.

The first groove segment 2143a and the third groove segment 2143c are arranged at an interval and at least partially opposite to each other. Optionally, the first groove segment 2143a and the third groove segment 2143c both extend in the width direction of the wall portion 211.

The second groove segment 2143b connects the first groove segment 2143a and the third groove segment 2143c, that is, the second groove segment 2143b is located between the first groove segment 2143a and the third groove segment 2143c, and two ends of the second groove segment 2143b are respectively connected to the first groove segment 2143a and the third groove segment 2143c. Of course, in another embodiment, the two ends of the second groove segment 2143b can extend out of the first groove segment 2143a and the third groove segment 2143c, respectively.

The first groove segment 2143a, the second groove segment 2143b, and the third groove segment 2143c jointly define the predetermined pressure relief region 21434. Referring to FIG. 5, a line connecting a free end of the first groove segment 2143a and a free end of the second groove segment 2143b is a first connecting line, and the first connecting line is arranged opposite to the second groove segment 2143b in the width direction of the wall portion 211. The enclosed region jointly surrounded by the first groove segment 2143a, the second groove segment 2143b, the third groove segment 2143c, and the first connecting line is the predetermined pressure relief region 21434. In other words, the first groove segment 2143a, the second groove segment 2143b, and the third groove segment 2143c are structures arranged along the edge of the predetermined pressure relief region 21434, so that the predetermined pressure relief region 21434 can be opened with the first groove segment 2143a, the second groove segment 2143b, and the third groove segment 2143c as boundaries, that is, the predetermined pressure relief region 21434 is formed in the region enclosed by the first groove segment 2143a, the second groove segment 2143b, and the third groove segment 2143c, so that a part of the pressure relief structure 214 located in the predetermined pressure relief region 21434 can be opened with the first groove segment 2143a, the second groove segment 2143b, and the third groove segment 2143c as boundaries during the pressure relief of the battery cell 20, thereby relieving the internal pressure of the battery cell 20.

In other embodiments, the shape of the first groove 2143 jointly formed by the first groove segment 2143a, the second groove segment 2143b, and the third groove segment 2143c can be a "U"-shaped structure, that is, the second groove segment 2143b has one end connected to one end of the first groove segment 2143a, and the other end connected to one end of the third groove segment 2143c, so as to form a predetermined pressure relief region 21434 on the pressure relief structure 214. At this point, the first connecting line closes an opening end of the U-shaped structure.

The plurality of groove segments include the first groove segment 2143a, the second groove segment 2143b, and the third groove segment 2143c, and the second groove segment 2143b connects the first groove segment 2143a and the third groove segment 2143c, so that the pressure relief structure 214 is capable of rupturing along the first groove segment 2143a, the second groove segment 2143b, and the third groove segment 2143c during the pressure relief of the battery cell 20, so as to open the predetermined pressure relief region 21434 to relieve the internal pressure of the battery cell 20. The connection position between the first groove segment 2143a and the second groove segment 2143b and the connection position between the first groove segment 2143a and the third groove segment 2143c are weaker, making it easier to rupture and open the predetermined pressure relief region 21434 for pressure relief, and further improving the pressure relief area and pressure relief rate of the battery cell 20.

Referring to FIG. 3, FIG. 4, FIG. 5, FIG. 6, FIG. 7 and FIG. 8, in some embodiments, the position where the second groove segment 2143b is connected to the first groove segment 2143a deviates from the two ends of the first groove segment 2143a, and the position where the second groove segment 2143b is connected to the third groove segment 2143c deviates from the two ends of the third groove segment 2143c, so as to form predetermined pressure relief regions 21434 on both sides of the second groove segment 2143b.

The connection position between the second groove segment 2143b and the first groove segment 2143a deviates from the two ends of the first groove segment 2143a, that is, the second groove segment 2143b is connected between the two ends of the first groove segment 2143a. Similarly, the connection position between the third groove segment 2143c and the second groove segment 2143b deviates from the two ends of the third groove segment 2143c, that is, the second groove segment 2143b is connected between the two ends of the third groove segment 2143c, so that the shape of the first groove 2143 jointly formed by the first groove segment 2143a, the second groove segment 2143b, and the third groove segment 2143c is a structure approximately in an "H" shape.

By setting the connection position between the first groove segment 2143a and the second groove segment 2143b to be located between the two ends of the first groove segment 2143a, and setting the connection position between the third groove segment 2143c and the second groove segment 2143b to be located between the two ends of the third groove segment 2143c, so that the first groove segment 2143a, the second groove segment 2143b, and the third groove segment 2143c form a structure similar to an "H" shape, and the predetermined pressure relief region 21434 can be formed on both sides of the second groove segment 2143b of the first groove 2143. Moreover, the two predetermined pressure relief regions 21434 are capable of being opened in a split manner for pressure relief during the pressure relief of the battery cell 20, which is conducive to further increasing the pressure relief effect of the battery cell 20 and can effectively improve the pressure relief rate of the battery cell 20.

Referring to FIG. 10, FIG. 10 is a bottom view of a shell 21 of a battery cell 20 according to still other embodiments of the present application. In some further embodiments, the first groove 2143 extends along an arc-shaped trajectory.

The arc-shaped trajectory may be a closed trajectory with its two ends connected, in which case the first groove 2143 is a closed groove. For example, the first groove 2143 can be a circular groove, an elliptical groove, etc. Refer to FIG. 10. In the embodiment shown in FIG. 10, the first groove 2143 is racetrack-shaped. The arc-shaped trajectory may also be a non-closed trajectory with its two ends unconnected, in which case the first groove 2143 is a non-closed groove. For example, the first groove 2143 can be a C-shaped groove, a U-shaped groove, or the like.

By extending the first groove 2143 along an arc-shaped trajectory, the first groove 2143 can define a relatively large predetermined pressure relief region 21434. During the pressure relief of the battery cell 20, the predetermined pressure relief region 21434 opens a relatively large opening, thereby facilitating the rapid pressure relief of the battery cell 20.

In some embodiments, the pressure relief structure 214 is integrally formed with the wall portion 211.

Integral forming means that the wall portion 211 and the pressure relief structure 214 are an integral structure when provided. For example, the pressure relief structure 214 may be formed on the wall portion 211 by stamping, cold heading, or the like.

The pressure relief structure 214 is integrally formed with the wall portion 211 without the need for an additional welding or bonding step, which helps reduce the risk of leakage from the pressure relief structure 214. Moreover, during production, it is easy to keep fracture initiation pressures of a plurality of battery cells 20 processed relatively consistent.

According to some embodiments of the present application, the material of the wall portion 211 includes steel.

For example, the material of the wall portion 211 may be carbon steel, alloy steel, stainless steel, or the like.

It should be noted that the material of the wall portion 211 includes steel. If the wall portion 211 is the end cover 216 of the shell 21, the material of the end cover 216 is steel; if the wall portion 211 is a wall of the case 215, the material of the case 215 is steel.

In this embodiment, the material of the wall portion 211 is set to steel. Since steel has the characteristic of high strength, the wall portion 211 made of steel has better strength, so that when the bursting pressure of the battery cell 20 is constant, the wall portion 211 can be made thinner, which is beneficial to reducing the space occupied by the wall portion 211.

In some embodiments, the steel material is carbon steel or stainless steel.

For example, the carbon steel may be low carbon steel, medium carbon steel or high carbon steel.

In this embodiment, carbon steel or stainless steel is used as the material of the wall portion 211, which has low cost and is easy to manufacture.

In some embodiments, the material of the pressure relief structure 214 includes aluminum alloy.

It is understandable that, in the embodiment where the pressure relief structure 214 and the wall portion 211 are integrally formed, the material of the wall portion 211 includes aluminum alloy. If the wall portion 211 is the end cover 216, the end cover 216 may be made of aluminum alloy; if the wall portion 211 is the wall portion 211 in the case 215, the case 215 may be made of aluminum alloy.

The aluminum alloy has the characteristics of light weight and good ductility, so it is easier to machine the first groove 2143 in the pressure relief structure 214. In the embodiment where the pressure relief structure 214 and the wall portion 211 are integrally formed, the wall portion 211 is made of aluminum alloy, which is capable of effectively reducing the difficulty of forming the wall portion 211.

In some embodiments, the aluminum alloy includes the following components in percentage by mass: greater than or equal to 99.6% of aluminum, less than or equal to 0.05% of copper, less than or equal to 0.35% of iron, less than or equal to 0.03% of magnesium, less than or equal to 0.03% of manganese, less than or equal to 0.25% of silicon, less than or equal to 0.03% of titanium, less than or equal to 0.05% of vanadium, less than or equal to 0.05% of zinc and less than or equal to 0.03% of other single elements.

Such aluminum alloy belongs to 3xxx-series aluminum alloy, is lower in hardness and has better forming capacity, so the processing difficulty of the first groove 2143 is reduced, which beneficial for improving the processing precision of the first groove 2143, and improving the pressure relief consistency of the pressure relief structure 214.

In some embodiments, the aluminum alloy includes the following components in percentage by mass: greater than or equal to 96.7% of aluminum, greater than or equal to 0.05% and less than or equal to 0.2% of copper, less than or equal to 0.7% of iron, less than or equal to 1.5% of manganese, less than or equal to 0.6% of silicon, less than or equal to 0.1% of zinc, less than or equal to 0.05% of other individual elements and less than or equal to 0.15% of total other elements.

This aluminum alloy belongs to 5xxx-series aluminum alloy, and the pressure relief structure 214 made of this aluminum alloy has higher hardness, higher strength, and good damage resistance.

In some other embodiments, the pressure relief structure 214 and the wall portion 211 are separably arranged, the wall portion 211 is provided with a pressure relief hole, and the pressure relief structure 214 is arranged on the wall portion 211 and covers the pressure relief hole.

"The pressure relief structure 214 and the wall portion 211 are separably arranged, the wall portion 211 is provided with a pressure relief hole, and the pressure relief structure 214 is arranged on the wall portion 211 and covers the pressure relief hole" means that during manufacturing, the pressure relief hole is formed on the wall portion 211, and the pressure relief structure 214 and the wall portion 211 are provided separately and finally connected together. For example, the pressure relief structure 214 may be welded to the wall portion 211. The pressure relief structure 214 may be a rupture disk mounted on the wall portion 211.

The pressure relief structure 214 is arranged separately from the wall portion 211 and is mounted on the wall portion 211, so as to facilitate processing and manufacturing.

Referring to FIG. 3, FIG. 4, FIG. 5, FIG. 6, FIG. 7 and FIG. 8, in some embodiments, the battery cell 20 includes an electrode assembly 22, and the electrode assembly 22 is accommodated in the shell 21. The wall portion 211 supports the electrode assembly 22 in the direction of gravity.

The wall portion 211 is a wall of the shell 21 that supports the electrode assembly 22 in the direction of gravity. It is understandable that the wall portion 211 may be a bottom wall of the case 215. The wall portion 211 may also be the end cover 216. When the wall portion 211 is the end cover 216, the battery cell 20 is used upside down.

The wall portion 211 supports the electrode assembly 22 in the direction of gravity, and the pressure relief structure 214 is arranged on the wall portion 211. In this way, during the pressure relief of the battery cell 20, the ejected fluid medium is not easy to act on other electrical connection components, thereby reducing the risk of short circuit during the pressure relief of the battery cell 20.

Referring to FIG. 3, FIG. 4, FIG. 5, FIG. 6, FIG. 7 and FIG. 8, in some embodiments, the battery cell 20 includes an electrode terminal 23, and the electrode terminal 23 is arranged on a wall of the shell 21 other than the wall portion 211.

The electrode terminal 23 and the pressure relief structure 214 are arranged on different walls of the shell 21. For example, when the wall portion 211 is the bottom wall of the case 215, the electrode terminal 23 may be arranged on the side wall 212 of the case 215 or on the end cover 216. For another example, when the wall portion 211 is a side wall 212 of the case 215, the electrode terminal 23 may be arranged on another side wall 212 or the bottom wall of the case 215 or on the end cover 216. When the wall portion 211 is the end cover 216, the electrode terminal 23 may be arranged on the side wall 212 or bottom wall of the case 215.

The electrode terminal 23 and the pressure relief structure 214 are respectively arranged on different walls of the shell 21. During the pressure relief of the battery cell 20, the ejected fluid medium is not easy to act on the electrode terminal 23 and causes short-circuit of the electrode terminal 23, thereby reducing the risk of short circuit during the pressure relief of the battery cell 20.

Optionally, the electrode terminal 23 is arranged on a wall of the shell 21 opposite to the wall portion 211.

When the wall portion 211 is the bottom wall of the case 215, the electrode terminal 23 may be arranged on the end cover 216. When the wall portion 211 is a side wall 212 of the case 215, the electrode terminal 23 may be arranged on another side wall 212 of the case 215 opposite to the wall portion 211. When the wall portion 211 is the end cover 216, the electrode terminal 23 may be arranged on the bottom wall of the case 215.

The electrode terminal 23 is arranged on the wall of the shell 21 opposite to the wall portion 211, and the electrode terminal 23 is far from the pressure relief structure 214; therefore, during the pressure relief of the battery cell 20, the ejected fluid medium is even not easy to act on the electrode terminal 23 to cause short-circuit of the electrode terminal 23, thereby further reducing the risk of short circuit during the pressure relief of the battery cell 20.

Referring to FIG. 3, FIG. 4, FIG. 5, FIG. 6, FIG. 7 and FIG. 8, in some embodiments, the shell 21 includes a case 215 and an end cover 216, the case 215 has an opening 2151, and the end cover 216 is connected to the case 215 and closes the opening 2151. The end cover 216 is the wall portion 211, or the case 215 includes the wall portion 211.

The case 215 includes side walls 212 and a bottom wall that are integrally formed, that is, the case 215 is manufactured by an integral forming process, for example, an integral forming process such as stamping, casting, or extrusion molding. In other words, the side walls 212 and the bottom wall of the case 215 are of an integral structure.

The case 215 includes a wall portion 211, that is, the wall portion 211 is a wall of the case 215. As an example, in FIG. 5 and FIG. 6, the wall portion 211 is the bottom wall of the case 215 arranged opposite to the end cover 216 in the thickness direction of the wall portion 211. Of course, in another embodiment, the wall portion 211 may also be a side wall 212 of the case 215.

It should be noted that the structure of the battery cell 20 is not limited thereto. In some embodiments, the battery cell 20 may also be of other structures. For example, the shell 21 may include a case 215 and an end cover 216. The case 215 is provided with an accommodating cavity having an opening 2151, and the accommodating cavity is used to accommodate an electrode assembly 22. The end cover 216 closes the opening 2151, and the end cover 216 is the wall portion 211.

It should be noted that the structure of the battery cell 20 can be diversified. In some embodiments, the shell 21 may include a case 215 and two end covers 216. The case 215 is provided with an accommodating cavity, and the accommodating cavity is used to accommodate the electrode assembly 22. The case 215 has openings 2151 formed at both ends of the wall portion 211 in the thickness direction, and the two openings 2151 are both in communication with the accommodating cavity. The two end covers 216 respectively close the two openings 2151, and one end cover 216 of the two end covers 216 is the wall portion 211.

The case 215 of the shell 21 is provided with the openings 2151 at both ends in the thickness direction of the wall portion 211, and the two end covers 216 respectively close the two openings 2151. The wall portion 211 is one end cover 216 of the two end covers 216. The battery cell 20 adopting this structure is convenient for assembling the battery cell 20 from both ends of the case 215, which is conducive to reducing the manufacturing difficulty and assembling difficulty of the battery cell 20.

When the end cover 216 is the wall portion 211, the pressure relief structure 214 is arranged on the end cover 216, which is simple and convenient to manufacture. When the case 215 includes the wall portion 211, the pressure relief structure 214 is arranged on a wall of the case 215, and the fluid medium sprayed from the pressure relief structure 214 is not easy to act on another electrical connection structure on the end cover 216, which is conducive to reducing the risk of short circuit of the battery cell 20.

An embodiment of the present application further provides a battery 100. The battery 100 includes the above-mentioned battery cell 20.

An embodiment of the present application further provides an electrical device. The electrical device includes the above-mentioned battery cell 20.

According to some embodiments of the present application, referring to FIGS. 3 to 8.

The embodiments of the present application provide a battery cell 20. The battery cell 20 includes a shell 21 and a pressure relief structure 214. The shell 21 has a wall portion 211, and the pressure relief structure 214 is arranged on the wall portion 211. The pressure relief structure 214 is provided with a first groove 2143, and the pressure relief structure 214 is configured to be capable of rupturing along at least a portion of the first groove 2143 during the pressure relief of the battery cell 20. The first groove 2143 includes at least one groove segment, which includes a groove bottom surface 21431 and two groove side surfaces 21432. The two groove side surfaces 21432 are arranged opposite to each other along the width direction of the groove segment, and a transition between the groove bottom surface 21431 and at least one groove side surface 21432 is implemented by a rounded corner 21433. The battery cell 20 is provided with the pressure relief structure 214, and the pressure relief structure 214 is provided with the first groove 2143; the pressure relief structure 214 is capable of rupturing along at least a portion of the first groove 2143 during pressure relief of the battery cell 20, thereby facilitating the release of pressure inside the battery cell 20. The first groove 2143 includes at least one groove segment, which includes a groove bottom surface 21431 and two groove side surfaces 21432 arranged opposite to each other along the width direction of the groove segment. By implementing the transition between the groove bottom surface 21431 and at least one groove side surface 21432 using the rounded corner 21433, it is beneficial to alleviating stress concentration at the groove segment, reduce strain at the groove segment, and reducing the risk of premature rupturing of the first groove 2143, thereby helping to improve the service life of the battery cell 20.

The radius of the rounded corner 21433 is r, and the width of the groove bottom surface 21431 is a, satisfying: 0.08≤r/a≤0.4. When r/a≥0.08, the radius of the rounded corner 21433 is relatively large, which has a good effect on alleviating stress concentration at the groove segment, effectively reducing the strain at the groove segment, reducing the risk of premature rupturing of the first groove 2143, and thus helping to improve the service life of the battery cell 20. When r/a≤0.4, the radius of the rounded corner 21433 is not excessively large, and the degree of stress concentration at the groove segment is not excessively low; this facilitates the timely rupturing of the groove segment during pressure relief of the battery cell 20, thereby helping to improve the timeliness of pressure relief of the battery cell 20. Therefore, when 0.08≤r/a≤0.4, both the service life of the battery cell 20 and the timeliness of pressure relief of the battery cell 20 can be taken into account.

Optionally, 0.12≤r/a≤0.3. When r/a≥0.12, the radius of the rounded corner 21433 is larger, which has a better effect on alleviating stress concentration at the groove segment, effectively reducing the strain at the groove segment, reducing the risk of premature rupturing of the first groove 2143, and thus helping to improve the service life of the battery cell 20. When r/a≤0.3, the radius of the rounded corner 21433 is not excessively large, and the degree of stress concentration at the groove segment is not excessively low; this facilitates the timely rupturing of the groove segment during pressure relief of the battery cell 20, thereby helping to improve the timeliness of pressure relief of the battery cell 20. Therefore, when 0.12≤r/a≤0.3, both the service life of the battery cell 20 and the timeliness of pressure relief of the battery cell 20 can be taken into account.

In some embodiments, 0.03 mm≤r≤0.15 mm. When r≥0.03 mm, the radius of the rounded corner 21433 is relatively large, which has a good effect on alleviating stress concentration at the groove segment, effectively reducing the strain at the groove segment, reducing the risk of premature rupturing of the first groove 2143, and thus helping to improve the service life of the battery cell 20. When r≤0.15 mm, the radius of the rounded corner 21433 is not excessively large, and the degree of stress concentration at the groove segment is not excessively low; this facilitates the timely rupturing of the groove segment during pressure relief of the battery cell 20, thereby helping to improve the timeliness of pressure relief of the battery cell 20. Therefore, when 0.03 mm≤r≤0.15 mm, both the service life of the battery cell 20 and the timeliness of pressure relief of the battery cell 20 can be taken into account.

Optionally, 0.06 mm≤r≤0.1 mm. When r≥0.06 mm, the radius of the rounded corner 21433 is larger, which has a better effect on alleviating stress concentration at the groove segment, effectively reducing the strain at the groove segment, reducing the risk of premature rupturing of the first groove 2143, and thus helping to improve the service life of the battery cell 20. When r≤0.1, the radius of the rounded corner 21433 is not excessively large, and the degree of stress concentration at the groove segment is not excessively low; this facilitates the timely rupturing of the groove segment during pressure relief of the battery cell 20, thereby helping to improve the timeliness of pressure relief of the battery cell 20. Therefore, when 0.06 mm≤r≤0.1 mm, both the service life of the battery cell 20 and the timeliness of pressure relief of the battery cell 20 can be taken into account.

The above description merely provides preferred embodiments of the present application, and is not intended to limit the present application. For those skilled in the art, the present application may have various modifications and alterations. Any modification, equivalent replacement, improvement, and the like made within the spirit and principle of the present application shall fall within the scope of protection of the present application.

## Claims

1. A battery cell, comprising:
a shell, provided with a wall portion; and
a pressure relief structure disposed on the wall portion, the pressure relief structure being provided with a first groove and configured to be capable of rupturing along at least a portion of the first groove during pressure relief of the battery cell,
wherein the first groove comprises at least one groove segment, the groove segment comprises a groove bottom surface and two groove side surfaces, the two groove side surfaces are arranged opposite to each other along a width direction of the groove segment, a transition between the groove bottom surface and at least one groove side surface is implemented by a rounded corner, a radius of the rounded corner is r, and a width of a groove opening of the groove segment is a, satisfying: 0.08≤r/a≤0.4.

2. The battery cell according to claim 1, wherein 0.12≤r/a≤0.3.

3. The battery cell according to claim 1 or 2, wherein 0.03 mm≤r≤0.15 mm.

4. The battery cell according to claim 3, wherein 0.06 mm≤r≤0.1 mm.

5. The battery cell according to any one of claims 1 to 4, wherein 0.08 mm≤a≤0.4 mm.

6. The battery cell according to claim 5, wherein 0.26 mm≤a≤0.34 mm.

7. The battery cell according to any one of claims 1 to 6, wherein:
the pressure relief structure has a first surface and a second surface arranged opposite to each other in a thickness direction of the wall portion, the pressure relief structure is provided with a plurality of steps of grooves arranged sequentially in a direction from the first surface to the second surface, and in two adjacent steps of grooves, the step of groove far from the first surface is arranged on a groove bottom surface of the step of groove close to the first surface; and
the step of groove farthest from the first surface among the plurality of steps of grooves is the first groove.

8. The battery cell according to claim 7, wherein the first surface is a surface of the pressure relief structure that faces away from the interior of the shell.

9. The battery cell according to any one of claims 1 to 8, wherein the first groove comprises a plurality of groove segments connected to one another, the plurality of groove segments jointly define at least one predetermined pressure relief region, and the predetermined pressure relief region is configured to be openable when the pressure relief structure ruptures along at least a portion of the first groove, so as to relieve an internal pressure of the battery cell.

10. The battery cell according to claim 9, wherein the plurality of groove segments comprise a first groove segment and a second groove segment which are connected and jointly define at least one predetermined pressure relief region.

11. The battery cell according to claim 9 or 10, wherein the plurality of groove segments comprise a first groove segment, a second groove segment, and a third groove segment, the first groove segment and the third groove segment are arranged opposite to each other, the second groove segment connects the first groove segment and the third groove segment, and the first groove segment, the second groove segment, and the third groove segment jointly define at least one predetermined pressure relief region.

12. The battery cell according to claim 11, wherein a connection position between the second groove segment and the first groove segment deviates from two ends of the first groove segment, and a connection position between the second groove segment and the third groove segment deviates from two ends of the third groove segment, so that the predetermined pressure relief region is formed on both sides of the second groove segment.

13. The battery cell according to any one of claims 1 to 12, wherein the first groove extends along an arc-shaped trajectory.

14. The battery cell according to any one of claims 1 to 13, wherein the pressure relief structure is integrally formed with the wall portion.

15. The battery cell according to any one of claims 1 to 13, wherein the pressure relief structure and the wall portion are arranged separately, the wall portion is provided with a pressure relief hole, and the pressure relief structure is mounted on the wall portion and covers the pressure relief hole.

16. The battery cell according to any one of claims 1 to 15, wherein the shell comprises:
a case having an opening; and
an end cover, connected to the case and closing the opening,
wherein the end cover is the wall portion, or the case comprises the wall portion.

17. A battery, comprising the battery cell according to any one of claims 1 to 16.

18. An electrical device, comprising the battery cell according to any one of claims 1 to 16.
